# EUROPEAN PATENT APPLICATION

(11) **EP 4 815 612 A1**
(43) Date of publication of application: **30.09.2026**
(21) Application number: 24906011.2
(22) Date of filing: 27.11.2024
(51) Int. Cl.: H04W 76/00

(54) **COMMUNICATION METHOD, AND RELATED APPARATUS**

(30) Priority: 18.12.2023 CN 202311760447
(71) Applicant: Huawei Technologies Co., Ltd., Shenzhen, Guangdong 518129 (CN)
(72) Inventor: ZHANG, Zhiqin, Shenzhen, Guangdong 518129 (CN); WANG, Yuan, Shenzhen, Guangdong 518129 (CN); FENG, Zhao, Shenzhen, Guangdong 518129 (CN)
(74) Representative: Gill Jennings & Every LLP
(86) International application number: PCT/CN2024/134746
(87) International publication number: WO 2025/130526

(57) **Abstract**

Embodiments of this application provide a communication method and a related apparatus. The method includes: A terminal device sends a first message, where the first message is used to request to create a first session, the first message includes first identification information, the first identification information indicates that the first session is used to collect first information, and the first information is used by a network element (for example, a network data analytics function) in a core network to perform data analysis, model inference, or model training processing; and the terminal device sends the first information to a first network element via the first session, where the first information includes measurement information of the terminal device. The terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of the core network, and improve network security.

## Description

This application claims priority to Chinese Patent Application No. 202311760447.4, filed with the China National Intellectual Property Administration on December 18, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

The rapid development of artificial intelligence and big data analysis provides basic technologies for network intelligence. To implement intelligence of mobile networks, network devices may provide artificial intelligence and big data analysis, and output analysis results.

Currently, the network devices that perform the foregoing analysis process may be core network devices. For example, the core network devices may include a network data analytics function (network data analytics function, NWDAF). The basis for the NWDAF to perform analysis may include measurement information obtained from terminal devices, and the measurement information is obtained by the terminal devices through measurement in communication processes.

In a process in which the core network devices obtain the measurement information from the terminal devices, the core network devices need to send address information of the core network devices to the terminal devices, so that the terminal devices report the measurement information to the core network devices based on the address information of the core network devices. This is not conducive to security and privacy protection of the core network devices and affects network security.

### SUMMARY

According to a first aspect, an embodiment of this application provides a communication method. The method is applied to a terminal device, and the method includes:

The terminal device sends a first message, where the first message is used to request to create a first session, the first message includes first identification information, the first identification information is used to identify the first session, the first identification information further indicates that the first session is used to collect first information, and the first information is used for model training or model inference; and the terminal device sends the first information via the first session, where the first information includes measurement information of the terminal device.

Optionally, the first message is used to request to modify the first session.

Optionally, the first session is a user plane connection between the terminal device and a user plane session network element.

Optionally, the first session is a protocol data unit (protocol data unit, PDU) session.

**In** an example, the first session is a session dedicated to transmitting the first information.

**In** an example, the first identification information (or second identification information determined based on the first identification information) is identification information dedicated to identifying the first session, for example, a data network name (data network name, DNN) dedicated to identifying the first session. The first identification information (or the second identification information) further indicates that the first session is used to collect or transmit the first information.

**In** another example, the first identification information (or the second identification information) is special identification information, for example, a special DNN.

**In** another example, the first identification information (or the second identification information) further indicates that the first information collected or transmitted via the first session needs to be transmitted to a first network element, and the first network element performs model training or model inference based on the first information.

**In** this embodiment of this application, the terminal device sends the first information to the first network element in the first session associated with the first identification information, where the first information includes the measurement information of the terminal device, and the first information is used by a network element (for example, a network data analytics function) in a core network to perform data analysis, model inference, or model training processing. The terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of the core network, and improve network security. In addition, the first session is used to collect the first information, and the first session is a data collection session. Compared with reporting the measurement information via signaling, in this application, the measurement information is reported via a user plane, so that signaling overheads can be effectively reduced, an amount of transmission data in the measurement information of the terminal device can be increased, and a network throughput can be improved.

According to a second aspect, an embodiment of this application provides a communication method. The method is applied to a terminal device, and the method includes:

The terminal device sends first information to a user plane network element via a first session, where the first session is used to collect the first information, the first information is used for model training or model inference, and the first information includes measurement information of the terminal device; and the terminal device sends seventh indication information to the user plane network element via the first session, where the seventh indication information indicates the user plane network element to locally store data of the first session, or the seventh indication information indicates the user plane network element to forward data of the first session to a first network element.

In a possible implementation, when the terminal device sends the first information to the user plane network element via the first session, the first information further includes seventh indication information, and the seventh indication information is used to identify that the first information needs to be forwarded to the first network element. For example, a packet carrying the first information carries the seventh indication information. Then, the user plane network element determines a data forwarding policy of the first session (or determines a data forwarding policy of the first information or a data processing policy of the first information) based on the seventh indication information. The user plane network element locally caches the first information or forwards the first information to the first network element based on the seventh indication information.

In another possible implementation, when the terminal device sends the first information to the user plane network element via the first session, the terminal device sends seventh indication information to the user plane network element via the first session, where the seventh indication information and the first information are independent of each other in the first session. The user plane network element determines, based on the seventh indication information, to locally cache the first information transmitted in the first session, or forward the first information to the first network element.

Optionally, the first session is a user plane connection established between the terminal device and the user plane network element, and other information may be forwarded via the first session between the terminal device and the user plane network element. In other words, in this case, the first session is not a dedicated session of the first information.

Optionally, the seventh indication information may be further used to identify that the first information is the measurement information of the terminal device, and the user plane network element preconfigures that the measurement information of the terminal device needs to be locally cached or forwarded to the first network element. After receiving the first information, the user plane network element locally caches the first information or forwards the first information to the first network element based on the seventh indication information included in the first information.

Optionally, the seventh indication information may further include identification information of the first network element, so that the user plane network element determines that the first information corresponding to the seventh indication information needs to be forwarded to the first network element.

For example, the first information includes a newly added field. When the newly added field is "00", the user plane network element is indicated to normally forward data in a session for carrying the newly added field. When the newly added field is "01", the user plane network element is indicated to locally store (or locally cache) data in a session for carrying the newly added field. When the newly added field is "11", the user plane network element is indicated to forward, to the first network element, data in a session for carrying the newly added field.

In another example, the first information includes a newly added field, and the newly added field carries the seventh indication information. When the seventh indication information is "01", it indicates that the first information needs to be locally stored (or locally cached) by the user plane network element, or it indicates that the first information needs to be forwarded by the user plane network element to the first network element.

In this embodiment of this application, the terminal device sends the first information to the user plane network element via the first session, where the first information further includes the seventh indication information, and the seventh indication information indicates the data forwarding policy of the first session, so that the user plane network element determines a processing manner of the data in the first session based on the seventh indication information. Therefore, after receiving the first information transmitted in the first session, the user plane network element forwards the first information to the first network element. Alternatively, after the user plane network element receives the first information transmitted in the first session, the user plane network element locally stores the first information, so that the user plane network element may report the locally stored first information to the first network element when the first network element needs the first information. The terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of the core network, and improve network security. In addition, the first session is used to collect the first information, and the first session is a data collection session. Compared with reporting the measurement information via signaling, in this application, the measurement information is reported via a user plane, so that signaling overheads can be effectively reduced, an amount of transmission data in the measurement information of the terminal device can be increased, and a network throughput can be improved.

With reference to the first aspect or the second aspect, in a possible implementation of the first aspect or the second aspect, the method further includes: The terminal device sends first indication information, where the first indication information indicates that the terminal device supports reporting of the first information.

Specifically, the terminal device may report a capability to a network side when accessing a network. For example, the terminal device sends a registration request to an access and mobility management network element, where the registration request includes the first indication information. Alternatively, when the first network element needs to obtain the first information, or the first network element enables an analytics processing function (for example, enables an artificial intelligence model training or model inference function), the first network element sends a first request to another network element. In response to the first request, the network side requests the terminal device to report a capability. In this case, the terminal device reports the capability to the network side.

In an example, the terminal device sends the first indication information to the access and mobility management network element via an access network device, where the first indication information indicates that the terminal device supports reporting of the first information.

In this embodiment of this application, the terminal device may send the first indication information to the network side, so that the network side determines specific terminal devices that can support reporting of the first information, to flexibly adapt to various service requirements, avoid a case in which the network side queries a terminal device that does not support reporting of the first information to report the first information, and reduce signaling overheads.

With reference to the first aspect or the second aspect, in a possible implementation of the first aspect or the second aspect, the method further includes: The terminal device sends second indication information, where the second indication information indicates an information type of the first information supported to be reported by the terminal device. For example, the second indication information indicates that the terminal device supports reporting of a measurement parameter of a reference signal and an index of a synchronization signal and PBCH block.

The information type of the first information is not specifically limited in this embodiment of this application. In an example, the information type of the first information includes at least one of the following: a power delay profile PDP, a channel energy response CER, a committed information rate CIR, a measurement parameter of a reference signal, an index of a synchronization signal and PBCH block SSB, where the reference signal includes at least one of the following: a sounding reference signal SRS or a channel state information-reference signal CSI-RS, a reference signal received power RSRP, reference signal received quality RSRQ, a signal to interference plus noise ratio SINR, or quality of service QoS statistical information of the terminal device, where the QoS statistical information includes at least one of the following: a maximum traffic rate, an average traffic rate, a minimum traffic rate, a maximum packet delay, a minimum packet delay, an average packet delay, a bit error rate, or a packet loss rate. For example, the second indication information indicates that the information type of the first information supported to be reported by the terminal device is the power delay profile PDP, the channel energy response CER, and the committed information rate CIR. In another example, the information type of the first information includes underlying measurement information, and the underlying measurement information includes but is not limited to a power delay profile PDP, a channel energy response CER, a committed information rate CIR, a measurement parameter of a reference signal, or an index of a synchronization signal and PBCH block SSB.

In this embodiment of this application, the terminal device may send the second indication information to the network side, so that the network side determines specific terminal devices that can support reporting of specific types of first information, to flexibly adapt to various service requirements.

With reference to the first aspect or the second aspect, in a possible implementation of the first aspect or the second aspect, the method further includes:

The terminal device obtains the first identification information from a local configuration; or the terminal device receives the first identification information from the access and mobility management network element.

For example, the registration request sent by the terminal device to the access and mobility management network element carries the first indication information and/or the second indication information. In response to the registration request, the access and mobility management network element obtains the first identification information, and then the access and mobility management network element sends a registration accept message to the terminal device, where the registration accept message includes the first identification information.

In this embodiment of this application, the terminal device may obtain the first identification information in a plurality of manners, to improve implementation flexibility of the solution.

With reference to the first aspect or the second aspect, in a possible implementation of the first aspect or the second aspect, sending the first information via the first session includes: The terminal device receives third indication information, where the third indication information is used to request to report the first information; and the terminal device sends the first information via the first session in response to the third indication information.

In this embodiment of this application, the terminal device may send the first information to the first network element via the first session based on an indication of the network side. When the network side does not need the first information, the terminal device does not send the first information, to save communication resources.

With reference to the first aspect or the second aspect, in a possible implementation of the first aspect or the second aspect, the method further includes: The terminal device receives fourth indication information, where the fourth indication information indicates an information type of the first information requested to be reported; and sends the first information via the first session in response to the fourth indication information, where an information type of the first information is the information type indicated by the fourth indication information.

In this embodiment of this application, the network side may indicate, by using the fourth indication information, the terminal device to report specific types of first information, to flexibly adapt to various services, prevent the terminal device from actively reporting first information that is not needed by the network side, and save communication resources.

With reference to the first aspect or the second aspect, in a possible implementation of the first aspect or the second aspect, after sending the first information via the first session, the method further includes: The terminal device receives fifth indication information, where the fifth indication information is used to request the terminal device to stop sending the first information; and in response to the fifth indication information, the terminal device stops sending the first information via the first session.

In this embodiment of this application, the terminal device may stop, based on an indication of the network side, sending the first information to the first network element via the first session. When the network side does not need the first information, the terminal device does not occupy communication resources for a long time to send the first information, to save communication resources.

With reference to the first aspect or the second aspect, in a possible implementation of the first aspect or the second aspect, the method further includes: The terminal device receives sixth indication information, where the sixth indication information indicates an information type of the first information that the terminal device stops sending; and in response to the sixth indication information, the terminal device stops sending, via the first session, the first information corresponding to the sixth indication information.

In this embodiment of this application, the network side may indicate, by using the sixth indication information, the terminal device to stop reporting specific types of first information, to flexibly adapt to various services and save communication resources.

With reference to the first aspect or the second aspect, in a possible implementation of the first aspect or the second aspect, the first identification information is a data network name DNN, single network slice selection assistance information S-NSSAI, or a session identifier.

With reference to the first aspect or the second aspect, in a possible implementation of the first aspect or the second aspect, a destination of the first information is a first network element, and the first network element includes a data collection coordination function or a network data analytics function.

With reference to the first aspect or the second aspect, in a possible implementation of the first aspect or the second aspect, the first information is further used by the first network element to perform model training or model inference of an artificial intelligence model. Model training or model inference of the artificial intelligence model may be specifically model training or model inference of an air interface artificial intelligence model. For another example, the first network element may evaluate a service of the terminal device based on the first information. For another example, the first network element may construct a service profile of the terminal device based on the first information, and further determine a service path, a quality of service requirement, quality of experience (quality of experience, QoE), or the like of a service related to the terminal device.

With reference to the first aspect or the second aspect, in a possible implementation of the first aspect or the second aspect, the first information includes at least one of the following:
a power delay profile PDP, a channel energy response CER, a committed information rate CIR, a measurement parameter of a reference signal, an index of a synchronization signal and PBCH block SSB, where the reference signal includes at least one of the following: a sounding reference signal SRS or a channel state information-reference signal CSI-RS,
a reference signal received power RSRP, reference signal received quality RSRQ, a signal to interference plus noise ratio SINR, or
quality of service QoS statistical information of the terminal device, where the QoS statistical information includes at least one of the following: a maximum traffic rate, an average traffic rate, a minimum traffic rate, a maximum packet delay, a minimum packet delay, an average packet delay, a bit error rate, or a packet loss rate.

With reference to the first aspect or the second aspect, in a possible implementation of the first aspect or the second aspect, the first message further includes eighth indication information, and the eighth indication information indicates that the first identification information included in the first message is used to identify the first session and identify that the first session is used to collect the first information. Specifically, the terminal device randomly generates the first identification information, and the first message further includes the eighth indication information. The access and mobility management network element finds that a session management function that supports the first identification information cannot be selected for the terminal device, and the access and mobility management network element determines, based on the eighth indication information, that the first session is used to collect the first information for the first network element, and the access and mobility management network element allocates second identification information to the terminal device, to improve implementation flexibility of the solution.

According to a third aspect, an embodiment of this application provides a communication method. The method is applied to an access and mobility management network element, and the method includes: receiving a fourth message from a first network element, where the fourth message is used to request identification information of a terminal device that supports reporting of first information, and the first information is used for model training or model inference; and
sending a first identifier set to the first network element in response to the fourth message, where the first identifier set includes one or more pieces of identification information, and the identification information included in the first identifier set indicates the terminal device that supports reporting of the first information.

For example, the fourth message is used to request identification information of a terminal device that supports reporting of measurement information of the terminal device.

In another possible implementation, the fourth message includes first identification information, the first identification information is used to identify a first session, and the first identification information further indicates that the first session is used to collect the first information. The fourth message is used to request identification information of a terminal device that supports reporting of the first information via the first session.

In another possible implementation, the fourth message includes ninth indication information, and the ninth indication information indicates the terminal device that supports reporting of the first information. The access and mobility management network element finds, based on the ninth indication information, terminal devices that support reporting of the first information from one or more terminal devices managed by the access and mobility management network element, and then determines the first identifier set based on identification information of the terminal devices.

In another possible implementation, the fourth message includes tenth indication information, and the tenth indication information indicates an information type of the first information. The access and mobility management network element finds, based on the tenth indication information from one or more terminal devices managed by the access and mobility management network element, terminal devices that support reporting of the first information indicated by the tenth indication information, and then determines the first identifier set based on identification information of the terminal devices.

In another possible implementation, the fourth message is used to request the first information of the terminal device.

In this embodiment of this application, after receiving the fourth message of the first network element, the access and mobility management network element may send, to the first network element, the terminal device that supports reporting of the first information via the first session. On the premise that a core network device does not disclose address information of the core network device, the first network element obtains the identification information of the terminal device that supports reporting of the first information via the first session, so that the first network element obtains, based on the identification information of the terminal device, the first identification information reported by the terminal device. Then, the first network element performs processing such as data analysis, model training, or model inference based on the first information, to effectively ensure security and privacy of the core network device, help hide an internal network element topology of a core network, and improve network security.

With reference to the third aspect, in a possible implementation of the third aspect, the access and mobility management network element sends third indication information to the terminal device in response to the fourth message, where the third indication information is used to request to report the first information.

In this embodiment of this application, the terminal device may send the first information to the first network element via the first session based on an indication of a network side. When the network side does not need the first information, the terminal device does not send the first information, to save communication resources. On the premise that the core network device does not disclose the address information of the core network device, the terminal device is indicated to report the first information to the first network element via the first session, so that the first network element (for example, a data analytics network element or a model training network element) performs processing such as data analysis, model training, or model inference based on the first information.

With reference to the third aspect, in a possible implementation of the third aspect, the method further includes: The access and mobility management network element receives a first message sent by the terminal device, where the first message is used to request to create a first session, the first message includes first identification information, and the first identification information is used to identify the first session and identify that the first session is used to collect the first information; and the access and mobility management network element sends a second message to a session management network element, where the second message is used to request to create the first session, the second message includes second identification information, the second identification information is determined based on the first identification information, and the second identification information is used to identify the first session and identify that the first session is used to collect the first information.

In a possible implementation, the first identification information and the second identification information are same identification information.

In some other possible implementations, the access and mobility management network element reallocates the second identification information based on the first identification information.

In this embodiment of this application, the first session is used to collect the first information, and the first session is a data collection session. Compared with reporting the measurement information via signaling, in this application, the measurement information is reported via a user plane, so that signaling overheads can be effectively reduced, an amount of transmission data in the measurement information of the terminal device can be increased, and a network throughput can be improved.

In this embodiment of this application, the access and mobility management network element may reallocate the second identification information based on the first identification information reported by the terminal device, so that the terminal device can successfully create or modify the first session, and the terminal device sends the first information to the first network element via the first session, to expand an application scope of the terminal device.

According to a fourth aspect, an embodiment of this application provides a communication method. The method is applied to an access and mobility management network element, and the method includes: receiving a first message sent by a terminal device, where the first message is used to request to create a first session, the first message includes first identification information, and the first identification information is used to identify the first session and identify that the first session is used to collect first information; and sending a second message to a session management network element, where the second message is used to request to create the first session, the second message includes second identification information, the second identification information is determined based on the first identification information, and the second identification information is used to identify the first session and identify that the first session is used to collect the first information.

In a possible implementation, the first identification information and the second identification information are same identification information.

In some other possible implementations, the access and mobility management network element reallocates the second identification information based on the first identification information.

In this embodiment of this application, the access and mobility management network element may reallocate the second identification information based on the first identification information reported by the terminal device, so that the terminal device can successfully create or modify the first session, and the terminal device sends the first information to a first network element via the first session, to expand an application scope of the terminal device. The first session is used to collect the first information, and the first session is a data collection session. Compared with reporting measurement information via signaling, in this application, the measurement information is reported via a user plane, so that signaling overheads can be effectively reduced, an amount of transmission data in the measurement information of the terminal device can be increased, and a network throughput can be improved.

With reference to the fourth aspect, in a possible implementation of the fourth aspect, the method further includes: receiving a fourth message from the first network element, where the fourth message is used to request the first information of the terminal device, and the first information is used for model training or model inference; and sending third indication information to the terminal device in response to the fourth message, where the third indication information is used to request to report the first information.

In this embodiment of this application, after receiving the fourth message of the first network element, the access and mobility management network element may indicate, by sending the third indication information to the terminal device, the terminal device to report the first information. On the premise that a core network device does not disclose address information of the core network device, the terminal device is indicated to report the first information to the first network element via the first session, so that the first network element (for example, a data analytics network element or a model training network element) performs processing such as data analysis, model training, or model inference based on the first information, to effectively ensure security and privacy of the core network device, help hide an internal network element topology of a core network, and improve network security.

With reference to the third aspect or the fourth aspect, in a possible implementation of the third aspect or the fourth aspect, the method further includes: sending the first identification information to the terminal device. For example, a registration request sent by the terminal device to the access and mobility management network element carries first indication information and/or second indication information. In response to the registration request, the access and mobility management network element obtains the first identification information, and then the access and mobility management network element sends a registration accept message to the terminal device, where the registration accept message includes the first identification information.

With reference to the third aspect or the fourth aspect, in a possible implementation of the third aspect or the fourth aspect, that the access and mobility management network element sends the first identification information to the terminal device includes: The access and mobility management network element sends the first identification information to the terminal device in response to the fourth message; or the access and mobility management network element receives first indication information of the terminal device, where the first indication information indicates that the terminal device supports reporting of the first information; and the access and mobility management network element sends the first identification information to the terminal device in response to the first indication information.

In this embodiment of this application, the access and mobility management network element may configure the first identification information for the terminal device in a plurality of manners, to improve implementation flexibility of the solution.

With reference to the third aspect or the fourth aspect, in a possible implementation of the third aspect or the fourth aspect, the method further includes:

The access and mobility management network element obtains identification information of the terminal device; and
the access and mobility management network element obtains the first identification information from subscription information of the terminal device based on the identification information of the terminal device.

In this embodiment of this application, the access and mobility management network element may obtain, from the subscription information of the terminal device, the first identification information that may be allocated to the terminal device, to improve implementation flexibility of the solution.

With reference to the third aspect or the fourth aspect, in a possible implementation of the third aspect or the fourth aspect, the method further includes:

The access and mobility management network element obtains the first identification information from a policy control function network element. For example, the policy control function network element configures the first identification information for the access and mobility management network element.

With reference to the third aspect or the fourth aspect, in a possible implementation of the third aspect or the fourth aspect, the method further includes:
obtaining the first identification information from the fourth message sent by the first network element, where the fourth message further carries the first identification information.

With reference to the third aspect or the fourth aspect, in a possible implementation of the third aspect or the fourth aspect, the fourth message includes any one or more of the following information: the identification information of the terminal device, the third indication information, or fourth indication information, where the first identification information is used to identify the first session and identify that the first session is used to collect the first information, the third indication information is used to request to report the first information, and the fourth indication information indicates an information type of the first information requested to be reported.

With reference to the third aspect or the fourth aspect, in a possible implementation of the third aspect or the fourth aspect, the method further includes: in response to the fourth message, determining the terminal device that supports reporting of the first information.

With reference to the third aspect or the fourth aspect, in a possible implementation of the third aspect or the fourth aspect, the method further includes: sending the third indication information to the terminal device, where the third indication information is used to request to report the first information.

In this embodiment of this application, the terminal device may send the first information to the first network element via the first session based on an indication of a network side. When the network side does not need the first information, the terminal device does not send the first information, to save communication resources.

With reference to the third aspect or the fourth aspect, in a possible implementation of the third aspect or the fourth aspect, the method further includes: sending the fourth indication information to the terminal device, where the fourth indication information indicates the information type of the first information requested to be reported.

In this embodiment of this application, the network side may indicate, by using the fourth indication information, the terminal device to report specific types of first information, to flexibly adapt to various services, prevent the terminal device from actively reporting first information that is not needed by the network side, and save communication resources.

With reference to the third aspect or the fourth aspect, in a possible implementation of the third aspect or the fourth aspect, the first message further includes eighth indication information, and the eighth indication information indicates that the first identification information included in the first message is used to identify the first session and identify that the first session is used to collect the first information. Specifically, the terminal device randomly generates the first identification information, and the first message further includes the eighth indication information. The access and mobility management network element finds that a session management function that supports the first identification information cannot be selected for the terminal device, and the access and mobility management network element determines, based on the eighth indication information, that the first session is used to collect the first information for the first network element, and the access and mobility management network element allocates second identification information to the terminal device, to improve implementation flexibility of the solution.

With reference to the third aspect or the fourth aspect, in a possible implementation of the third aspect or the fourth aspect, the method further includes: obtaining the first identification information from the first message; and detecting whether the first identification information is available; and if the first identification information is unavailable, and the first message further includes eighth indication information, where the eighth indication information indicates that the first identification information included in the first message is used to identify the first session and identify that the first session is used to collect the first information, obtaining the second identification information.

Specifically, the access and mobility management network element locally maintains a fourth identifier set (or obtains, from the subscription information of the terminal device, the first identification information that may be allocated to the terminal device). The fourth identifier set includes one or more pieces of identification information, and the identification information included in the fourth identifier set indicates that a session corresponding to the identification information is used to collect the first information for the first network element. After receiving the first message, the access and mobility management network element extracts the first identification information from the first message, and then detects whether the first identification information is recorded in the fourth identifier set; and if the first identification information exists in the fourth identifier set, determines that the first identification information is used to identify the first session and indicates that the first session is used to collect the first information for the first network element; or if the first identification information does not exist in the fourth identifier set, the first session is not used to collect the first information for the first network element, and the access and mobility management network element processes the first message based on a normal service procedure; or if the first identification information does not exist in the fourth identifier set, but the first message further includes eighth indication information, where the eighth indication information indicates that the first identification information included in the first message is used to identify the first session and identify that the first session is used to collect the first information, determines the second identification information from the fourth identifier set.

In this embodiment of this application, the access and mobility management network element may reallocate the second identification information based on the first identification information reported by the terminal device, so that the terminal device can successfully create or modify the first session, and the terminal device sends the first information to the first network element via the first session, to expand an application scope of the terminal device.

With reference to the third aspect or the fourth aspect, in a possible implementation of the third aspect or the fourth aspect, the fourth message further includes identification information of the first network element, the second message further includes the identification information of the first network element, and the identification information of the first network element is used to determine a data forwarding policy of the first session.

In this embodiment of this application, the identification information of the first network element is sent to the session management network element, and the first network element can receive the first information of the terminal device forwarded by a user plane network element, without sending the first request to the session management network element or the user plane network element. This reduces signaling overheads and improves communication efficiency.

With reference to the third aspect or the fourth aspect, in a possible implementation of the third aspect or the fourth aspect, the method further includes: sending a first identifier set to the first network element in response to the fourth message, where the first identifier set includes one or more pieces of identification information, and the identification information included in the first identifier set indicates the terminal device that supports reporting of the first information.

With reference to the third aspect or the fourth aspect, in a possible implementation of the third aspect or the fourth aspect, the method further includes: sending a second identifier set to the first network element, where the second identifier set includes one or more identifiers, the identifiers included in the second identifier set indicate one or more session management network elements, and the session management network element indicated by the second identifier set corresponds to the terminal device that supports sending of the first information.

With reference to the third aspect or the fourth aspect, in a possible implementation of the third aspect or the fourth aspect, the method further includes: sending a third identifier set to the first network element, where the third identifier set includes one or more identifiers, the identifiers included in the third identifier set indicate one or more user plane network elements, and the user plane network element indicated by the third identifier set corresponds to the terminal device that supports sending of the first information.

With reference to the third aspect or the fourth aspect, in a possible implementation of the third aspect or the fourth aspect, the method further includes: sending fifth indication information to the terminal device, where the fifth indication information is used to request the terminal device to stop sending the first information.

In this embodiment of this application, the terminal device may stop, based on an indication of the network side, sending the first information to the first network element via the first session. When the network side does not need the first information, the terminal device does not occupy communication resources for a long time to send the first information, to save communication resources.

With reference to the third aspect or the fourth aspect, in a possible implementation of the third aspect or the fourth aspect, the method further includes:
sending sixth indication information to the terminal device, where the sixth indication information indicates an information type of the first information that the terminal device stops sending.

In this embodiment of this application, the network side may indicate, by using the sixth indication information, the terminal device to stop reporting specific types of first information, to flexibly adapt to various services and save communication resources.

According to a fifth aspect, an embodiment of this application provides a communication method. The method is applied to a session management network element, and the method includes: receiving a second message sent by an access and mobility management network element, where the second message is used to request to create a first session, the second message includes second identification information, the second identification information is used to identify the first session and indicate that the first session is used to collect first information, and the first information is used for model training or model inference; determining a data forwarding policy of the first session based on the second message; and sending the data forwarding policy of the first session to a user plane network element.

In this embodiment of this application, after receiving the second message, the session management network element determines the data forwarding policy of the first session based on the second identification information carried in the second message. Then, the session management network element configures the data forwarding policy of the first session for the user plane network element, so that the user plane network element forwards data of the first session to a first network element after receiving the data of the first session, and the first network element performs analysis processing based on the data of the first session. On the premise that a core network device does not disclose address information of the core network device, a terminal device reports the first information to the first network element via the first session, so that the first network element (for example, a data analytics network element or a model training network element) performs processing such as data analysis, model training, or model inference based on the first information, to effectively ensure security and privacy of the core network device, help hide an internal network element topology of a core network, and improve network security.

With reference to the fifth aspect, in a possible implementation of the fifth aspect, the data forwarding policy of the first session includes: the user plane network element locally stores data of the first session, or the user plane network element forwards data of the first session to the first network element.

With reference to the fifth aspect, in a possible implementation of the fifth aspect, the second message further includes identification information of the first network element; and determining the data forwarding policy of the first session based on the second message includes: determining, based on the identification information of the first network element further included in the second message, that the data forwarding policy of the first session is that the user plane network element forwards the data of the first session to the first network element.

In this embodiment of this application, the identification information of the first network element includes but is not limited to address information of the first network element, a port number of the first network element, or the like.

With reference to the fifth aspect, in a possible implementation of the fifth aspect, the method further includes: sending a third message to the user plane network element in response to the second message, where the third message is used to request to create the first session, and the third message includes the second identification information and/or the identification information of the first network element.

In this embodiment of this application, in a process of creating or modifying the first session, the session management network element may further send the identification information of the first network element and the second identification information to the user plane network element. In this way, the user plane network element forwards the data of the first session related to the second identification information (or first identification information) to the first network element, to ensure that the first network element can successfully receive the data of the first session (for example, the first information). The first network element can obtain the first information without sending a first request to the user plane network element, to reduce signaling overheads.

With reference to the fifth aspect, in a possible implementation of the fifth aspect, the sending the data forwarding policy of the first session to the user plane network element includes: sending seventh indication information to the user plane network element, where the seventh indication information indicates the user plane network element to locally store (or locally cache) the data of the first session, or the seventh indication information indicates the user plane network element to forward the data of the first session to the first network element.

For example, when the seventh indication information is "01", the user plane network element is indicated to locally store (or locally cache) data in a session for carrying the seventh indication information.

In this embodiment of this application, the session management network element may further send the first information to the user plane network element. In addition, the session management network element further sends identification information of the first session to the user plane network element. The seventh indication information indicates the data forwarding policy of the first session, so that the user plane network element determines a processing manner of the data in the first session based on the seventh indication information.

With reference to the fifth aspect, in a possible implementation of the fifth aspect, the method further includes: receiving a sixth message sent by the first network element, where the sixth message is used to request the first information of the terminal device; and in response to the sixth message, sending any one or more of the following information to the first network element: identification information of the terminal device that supports reporting of the first information, identification information of the user plane network element corresponding to the terminal device that supports reporting of the first information, or the second identification information.

In this embodiment of this application, the first network element may further send the sixth message to the session management network element, and the session management network element feeds back, to the first network element in response to the sixth message, the identification information of the terminal device that supports reporting of the first information, the identification information of the user plane network element corresponding to the terminal device that supports reporting of the first information, or the second identification information associated with the first session. Therefore, the first network element obtains the first information related to the first session from the user plane network element, to improve implementation flexibility of the solution.

According to a sixth aspect, an embodiment of this application provides a communication method. The method is applied to a user plane network element, and the method includes: receiving second identification information, where the second identification information is used to identify a first session, the second identification information further indicates that the first session is used to collect first information, and the first information is used for model training or model inference; receiving a data forwarding policy of the first session, where the data forwarding policy of the first session indicates a data forwarding policy of the first information sent by a terminal device via the first session; and sending, to a first network element according to the data forwarding policy of the first session, the first information received by the user plane network element via the first session.

In this embodiment of this application, according to the data forwarding policy of the first session, the user plane network element can forward locally stored (or locally cached) data of the first session to the first network element, or forward, to the first network element, data of the first session sent by the terminal device. After the user plane network element receives the first information reported by the terminal device, the user plane network element forwards the first information to the first network element based on the second identification information and the data forwarding policy of the first session, so that the first network element can successfully receive the first information transmitted via the first session. This ensures that the first network element can perform model training or model inference based on the first information, to effectively ensure security and privacy of a core network device, help hide an internal network element topology of a core network, and improve network security. In addition, the first session is used to collect the first information, and the first session is a data collection session. Compared with reporting measurement information via signaling, in this application, the measurement information is reported via a user plane, so that signaling overheads can be effectively reduced, an amount of transmission data in the measurement information of the terminal device can be increased, and a network throughput can be improved.

With reference to the sixth aspect, in a possible implementation of the sixth aspect, receiving the second identification information includes: receiving the second identification information sent by the first network element; or receiving the second identification information sent by a session management network element. The user plane network element may obtain the second identification information in a plurality of manners. In a plurality of scenarios, the user plane network element determines the data forwarding policy of the corresponding first session based on the second identification information, and further determines a forwarding policy of the data carried in the first session, to improve implementation flexibility.

With reference to the sixth aspect, in a possible implementation of the sixth aspect, the data forwarding policy of the first session includes any one of the following: the user plane network element locally stores data of the first session, or the user plane network element forwards data of the first session to the first network element.

With reference to the sixth aspect, in a possible implementation of the sixth aspect, receiving the second identification information sent by the first network element includes: receiving a third message sent by the session management network element, where the third message is used to request to create the first session, the third message includes the second identification information, and the second identification information is used to identify the first session and identify that the first session is used to collect the first information.

In this embodiment of this application, the second identification information is carried in the third message for creating or modifying the first session, so that the first session can access the first network element corresponding to the second identification information, and the data of the first session is not forwarded to the Internet.

With reference to the sixth aspect, in a possible implementation of the sixth aspect, when the data forwarding policy of the first session is that the user plane network element locally stores the data of the first session, receiving the second identification information sent by the session management network element includes: receiving a fifth message sent by the first network element, where the fifth message includes the second identification information; and sending the first information to the first network element according to the data forwarding policy of the first session includes: sending the first information to the first network element in response to the fifth message, where the first information is data determined by the user plane network element from locally stored data based on the second identification information.

In this embodiment of this application, when the fifth message includes the second identification information, the user plane network element forwards, based on the fifth message, the locally stored (or locally cached) data of the first session related to the second identification information to the first network element, to improve implementation flexibility of the solution.

With reference to the sixth aspect, in a possible implementation of the sixth aspect, the fifth message further includes identification information of the first network element.

In this embodiment of this application, when the fifth message includes the identification information of the first network element, the user plane network element directly forwards, to the first network element based on the identification information of the first network element included in the fifth message, the data of the first session sent by the terminal device, to improve implementation flexibility of the solution.

With reference to the sixth aspect, in a possible implementation of the sixth aspect, when the data forwarding policy of the first session is that the user plane network element forwards the data of the first session to the first network element, forwarding the first information to the first network element according to the data forwarding policy of the first session includes: receiving a third message sent by the session management network element, where the third message is used to request to create the first session, the third message includes the second identification information, and the second identification information indicates that the first session is used to collect the first information for the first network element; determining, based on the identification information of the first network element included in the third message, that a forwarding destination of the data of the first session is the first network element; and forwarding the first information from the terminal device to the first network element according to the data forwarding policy of the first session.

In this embodiment of this application, the user plane network element may alternatively obtain the identification information of the first network element in a creation or modification phase of the first session, so that the user plane network element directly forwards, to the first network element based on the identification information of the first network element, the data of the first session sent by the terminal device, to improve implementation flexibility of the solution.

With reference to the sixth aspect, in a possible implementation of the sixth aspect, receiving the data forwarding policy of the first session includes: receiving the first information sent by the terminal device, where the first information further includes seventh indication information, and the seventh indication information indicates the data forwarding policy of the first session.

In this embodiment of this application, the user plane network element may further determine the data forwarding policy of the first session based on an indication of the terminal device (the seventh indication information), to improve implementation flexibility of the solution and effectively reduce signaling overheads.

According to a seventh aspect, an embodiment of this application provides a communication method. The method is applied to a first network element, and the method includes: sending a first request, where the first request includes second identification information, the first request indicates a user plane network element to report first information corresponding to the second identification information, and a first session is a session established between a terminal device and the first network element; and receiving the first information from the user plane network element, where the first information is transmitted in the first session, and the first information includes measurement information of the terminal device.

For example, the first network element may perform model training or model inference of an artificial intelligence model based on the first information. Model training or model inference of the artificial intelligence model may be specifically model training or model inference of an air interface artificial intelligence model. For another example, the first network element may evaluate a service of the terminal device based on the first information. For another example, the first network element may construct a service profile of the terminal device based on the first information, and further determine a service path, a quality of service requirement, quality of experience, or the like of a service related to the terminal device.

In this embodiment of this application, when subscribing to the first information from another network element (for example, an access and mobility management network element, a session management network element, or the user plane network element), the first network element subscribes to the first information related to the second identification information by sending the second identification information. When the first network element does not disclose address information of the first network element, the first information of the terminal device is obtained, to effectively ensure security and privacy of a core network device, help hide an internal network element topology of a core network, and improve network security. In addition, the first session is used to collect the first information, and the first session is a data collection session. Compared with reporting the measurement information via signaling, in this application, the measurement information is reported via a user plane, so that signaling overheads can be effectively reduced, an amount of transmission data in the measurement information of the terminal device can be increased, and a network throughput can be improved.

With reference to the seventh aspect, in a possible implementation of the seventh aspect, performing analysis processing based on the first information includes: performing model training or model inference based on the first information.

With reference to the seventh aspect, in a possible implementation of the seventh aspect, the first request further includes identification information of the first network element, and the identification information of the first network element is used to determine a data forwarding policy of the first session.

In this embodiment of this application, the identification information of the first network element is sent to another network element, and the first network element can receive the first information of the terminal device forwarded by the user plane network element, without sending the first request to the session management network element or the user plane network element. This reduces signaling overheads and improves communication efficiency.

With reference to the seventh aspect, in a possible implementation of the seventh aspect, the sending the first request includes: sending a fourth message to the access and mobility management network element, where the fourth message is used to request identification information of the terminal device that supports reporting of the first information; or sending a fifth message to the user plane network element, where the fifth message is used to request the first information of the terminal device; or sending a sixth message to the session management network element, where the sixth message is used to request the first information of the terminal device.

Optionally, the fourth message is further used to request identification information of the session management network element related to the terminal device that supports reporting of the first information.

Optionally, the fourth message is further used to configure first identification information and/or the second identification information for the access and mobility management network element.

In this embodiment of this application, the first network element may send the first request to a plurality of network elements to obtain the first information, to improve implementation flexibility of the solution.

With reference to the seventh aspect, in a possible implementation of the seventh aspect, the method further includes:
receiving a third identifier set sent by the session management network element, where the third identifier set includes one or more identifiers, the identifiers included in the third identifier set indicate one or more user plane network elements, and the user plane network element indicated by the third identifier set corresponds to the terminal device that supports sending of the first information.

According to an eighth aspect, an embodiment of this application provides a communication method. The communication method is used for a terminal device, and the communication apparatus includes:
a transceiver module, configured to send a first message, where the first message is used to request to create a first session, the first message includes first identification information, the first identification information is used to identify the first session, the first identification information further indicates that the first session is used to collect first information, and the first information is used for model training or model inference.

The transceiver module is further configured to send the first information via the first session, where the first information includes measurement information of the terminal device.

In a possible implementation,
the transceiver module is further configured to send first indication information, where the first indication information indicates that the terminal device supports reporting of the first information.

In a possible implementation,
the transceiver module is further configured to send second indication information, where the second indication information indicates an information type of the first information supported to be reported by the terminal device.

In a possible implementation,
the transceiver module is further configured to obtain the first identification information from a local configuration; or
the transceiver module is further configured to receive the first identification information from an access and mobility management network element.

In a possible implementation,
the transceiver module is further configured to receive third indication information, where the third indication information is used to request to report the first information; and
the transceiver module is further configured to send the first information via the first session in response to the third indication information.

In a possible implementation,
the transceiver module is further configured to receive fourth indication information, where the fourth indication information indicates an information type of the first information requested to be reported; and
the transceiver module is further configured to send the first information via the first session in response to the fourth indication information, where an information type of the first information is the information type indicated by the fourth indication information.

In a possible implementation,
the transceiver module is further configured to receive fifth indication information, where the fifth indication information is used to request the terminal device to stop sending the first information; and
the transceiver module is further configured to: in response to the fifth indication information, stop sending the first information via the first session.

In a possible implementation,
the transceiver module is further configured to receive sixth indication information, where the sixth indication information indicates an information type of the first information that the terminal device stops sending; and
the transceiver module is further configured to: in response to the sixth indication information, stop sending, via the first session, the first information corresponding to the sixth indication information.

In a possible implementation, the first identification information is a data network name DNN, single network slice selection assistance information S-NSSAI, or a session identifier.

In a possible implementation, a destination of the first information is a first network element, and the first network element includes a data collection coordination function or a network data analytics function.

In a possible implementation, the first information is further used by the first network element to perform model training or model inference of an artificial intelligence model.

In a possible implementation, the first information includes at least one of the following:
a power delay profile PDP, a channel energy response CER, a committed information rate CIR, a measurement parameter of a reference signal, an index of a synchronization signal and PBCH block SSB, where the reference signal includes at least one of the following: a sounding reference signal SRS or a channel state information-reference signal CSI-RS,
a reference signal received power RSRP, reference signal received quality RSRQ, a signal to interference plus noise ratio SINR, or
quality of service QoS statistical information of the terminal device, where the QoS statistical information includes at least one of the following: a maximum traffic rate, an average traffic rate, a minimum traffic rate, a maximum packet delay, a minimum packet delay, an average packet delay, a bit error rate, or a packet loss rate.

According to a ninth aspect, an embodiment of this application provides a communication apparatus. The communication apparatus is used for a terminal device, and the communication apparatus includes:
the transceiver module is further configured to send first information to a user plane network element via a first session, where the first session is used to collect first information, the first information is used for model training or model inference, and the first information includes measurement information of the terminal device.

The transceiver module is further configured to send seventh indication information to a session management network element via the first session, where the seventh indication information indicates the user plane network element to locally store data of the first session, or the seventh indication information indicates the user plane network element to forward data of the first session to a first network element.

In a possible implementation,
the transceiver module is further configured to send the seventh indication information to the session management network element via the first session.

In a possible implementation,
the transceiver module is further configured to send first indication information, where the first indication information indicates that the terminal device supports reporting of the first information.

In a possible implementation,
the transceiver module is further configured to send second indication information, where the second indication information indicates an information type of the first information supported to be reported by the terminal device.

In a possible implementation,
the transceiver module is further configured to obtain first identification information from a local configuration; or
the transceiver module is further configured to receive first identification information from an access and mobility management network element.

In a possible implementation,
the transceiver module is further configured to receive third indication information, where the third indication information is used to request to report the first information; and
the transceiver module is further configured to send the first information via the first session in response to the third indication information.

In a possible implementation,
the transceiver module is further configured to receive fourth indication information, where the fourth indication information indicates an information type of the first information requested to be reported; and
the transceiver module is further configured to send the first information via the first session in response to the fourth indication information, where an information type of the first information is the information type indicated by the fourth indication information.

In a possible implementation,
the transceiver module is further configured to receive fifth indication information, where the fifth indication information is used to request the terminal device to stop sending the first information; and
the transceiver module is further configured to: in response to the fifth indication information, stop sending the first information via the first session.

In a possible implementation,
the transceiver module is further configured to receive sixth indication information, where the sixth indication information indicates an information type of the first information that the terminal device stops sending; and
the transceiver module is further configured to: in response to the sixth indication information, stop sending, via the first session, the first information corresponding to the sixth indication information.

In a possible implementation, a destination of the first information is a first network element, and the first network element includes a data collection coordination function or a network data analytics function.

In a possible implementation, the first information is further used by the first network element to perform model training or model inference of an artificial intelligence model.

In a possible implementation, the first information includes at least one of the following:
a power delay profile PDP, a channel energy response CER, a committed information rate CIR, a measurement parameter of a reference signal, an index of a synchronization signal and PBCH block SSB, where the reference signal includes at least one of the following: a sounding reference signal SRS or a channel state information-reference signal CSI-RS,
a reference signal received power RSRP, reference signal received quality RSRQ, a signal to interference plus noise ratio SINR, or
quality of service QoS statistical information of the terminal device, where the QoS statistical information includes at least one of the following: a maximum traffic rate, an average traffic rate, a minimum traffic rate, a maximum packet delay, a minimum packet delay, an average packet delay, a bit error rate, or a packet loss rate.

According to a tenth aspect, an embodiment of this application provides a communication apparatus. The communication apparatus is used for an access and mobility management network element, and the communication apparatus includes:
a transceiver module, configured to receive a first message sent by a terminal device, where the first message is used to request to create a first session, the first message includes first identification information, and the first identification information is used to identify the first session and identify that the first session is used to collect first information.

The transceiver module is further configured to send a second message to a session management network element, where the second message is used to request to create the first session, the second message includes second identification information, the second identification information is determined based on the first identification information, and the second identification information is used to identify the first session and identify that the first session is used to collect the first information.

In a possible implementation,
the transceiver module is further configured to receive a fourth message from a first network element, where the fourth message is used to request the first information of the terminal device, and the first information is used for model training or model inference; and
the transceiver module is further configured to send third indication information to the terminal device in response to the fourth message, where the third indication information is used to request to report the first information.

In a possible implementation, the transceiver module is further configured to send a first identifier set to the first network element in response to the fourth message, where the first identifier set includes one or more pieces of identification information, and the identification information included in the first identifier set indicates the terminal device that supports reporting of the first information.

In a possible implementation,
the transceiver module is further configured to send the first identification information to the terminal device.

In a possible implementation,
the fourth message includes any one or more of the following information:
identification information of the terminal device, the third indication information, or fourth indication information, where the third indication information is used to request to report the first information, and the fourth indication information indicates an information type of the first information requested to be reported.

In a possible implementation,
the transceiver module is further configured to obtain the first identification information from subscription information of the terminal device; or
the transceiver module is further configured to obtain the first identification information from a policy control function network element; or
the transceiver module is further configured to obtain the first identification information from the fourth message sent by the first network element, where the fourth message further carries the first identification information.

In a possible implementation, the fourth message further includes identification information of the first network element; and
the second message further includes the identification information of the first network element, and the identification information of the first network element is used to determine a data forwarding policy of the first session.

In a possible implementation,
the transceiver module is further configured to send the fourth indication information to the terminal device, where the fourth indication information indicates the information type of the first information requested to be reported.

In a possible implementation,
the transceiver module is further configured to send fifth indication information to the terminal device, where the fifth indication information is used to request the terminal device to stop sending the first information.

According to an eleventh aspect, an embodiment of this application provides a communication apparatus. The communication apparatus is used for an access and mobility management network element, and the communication apparatus includes:
a transceiver module, configured to receive a fourth message from a first network element, where the fourth message is used to request identification information of a terminal device that supports reporting of first information, the fourth message is used to request the identification information of the terminal device that supports reporting of the first information, and the first information is used for model training or model inference.

The transceiver module is further configured to send a first identifier set to the first network element in response to the fourth message, where the first identifier set includes one or more pieces of identification information, and the identification information included in the first identifier set indicates the terminal device that supports reporting of the first information.

In a possible implementation,
the transceiver module is further configured to send third indication information to the terminal device in response to the fourth message, where the third indication information is used to request to report the first information.

In a possible implementation,
the transceiver module is further configured to receive a first message sent by the terminal device, where the first message is used to request to create a first session, the first message includes first identification information, and the first identification information is used to identify the first session and identify that the first session is used to collect the first information; and
send a second message to a session management network element, where the second message is used to request to create the first session, the second message includes second identification information, the second identification information is determined based on the first identification information, and the second identification information is used to identify the first session and identify that the first session is used to collect the first information.

In a possible implementation,
the transceiver module is further configured to send the first identification information to the terminal device.

In a possible implementation,
the fourth message includes any one or more of the following information:
the identification information of the terminal device, the third indication information, or fourth indication information, where the third indication information is used to request to report the first information, and the fourth indication information indicates an information type of the first information requested to be reported.

In a possible implementation,
the transceiver module is further configured to obtain the first identification information from subscription information of the terminal device; or
the transceiver module is further configured to obtain the first identification information from a policy control function network element; or
the transceiver module is further configured to obtain the first identification information from the fourth message sent by the first network element, where the fourth message further carries the first identification information.

In a possible implementation, the fourth message further includes identification information of the first network element; and
the second message further includes the identification information of the first network element, and the identification information of the first network element is used to determine a data forwarding policy of the first session.

In a possible implementation,
the transceiver module is further configured to send the fourth indication information to the terminal device, where the fourth indication information indicates the information type of the first information requested to be reported.

In a possible implementation,
the transceiver module is further configured to send fifth indication information to the terminal device, where the fifth indication information is used to request the terminal device to stop sending the first information.

According to a twelfth aspect, an embodiment of this application provides a communication apparatus. The communication apparatus is used for a session management network element, and the communication apparatus includes:
a transceiver module, configured to receive a second message sent by an access and mobility management network element, where the second message is used to request to create a first session, the second message includes second identification information, the second identification information is used to identify the first session and indicates that the first session is used to collect first information, and the first information is used for model training or model inference; and
a processing module, configured to determine a data forwarding policy of the first session based on the second message.

The transceiver module is further configured to send the data forwarding policy of the first session to a user plane network element.

In a possible implementation, the data forwarding policy of the first session includes: the user plane network element locally stores data of the first session, or the user plane network element forwards data of the first session to a first network element.

In a possible implementation, the second message further includes identification information of the first network element; and
the processing module is further configured to determine, based on the identification information of the first network element further included in the second message, that the data forwarding policy of the first session is that the user plane network element forwards the data of the first session to the first network element.

In a possible implementation,
the transceiver module is further configured to send a third message to the user plane network element in response to the second message, where the third message is used to request to create the first session, and the third message includes the second identification information and/or the identification information of the first network element.

In a possible implementation,
the transceiver module is further configured to send seventh indication information to the user plane network element, where the seventh indication information indicates the user plane network element to locally store the data of the first session, or the seventh indication information indicates the user plane network element to forward the data of the first session to the first network element.

In a possible implementation,
the transceiver module is further configured to receive a sixth message sent by the first network element, where the sixth message is used to request the first information of the terminal device; and
the transceiver module is further configured to: in response to the sixth message, send any one or more of the following information to the first network element: identification information of the terminal device that supports reporting of the first information, identification information of the user plane network element corresponding to the terminal device that supports reporting of the first information, or the second identification information.

According to a thirteenth aspect, an embodiment of this application provides a communication apparatus. The communication apparatus is used for a user plane network element, and the communication apparatus includes:
a transceiver module, configured to receive second identification information, where the second identification information is used to identify a first session, the second identification information further indicates that the first session is used to collect first information, and the first information is used for model training or model inference, where
the transceiver module is further configured to receive a data forwarding policy of the first session, where the data forwarding policy of the first session indicates a data forwarding policy of the first information sent by a terminal device via the first session; and
a processing module, configured to send, to a first network element according to the data forwarding policy of the first session, the first information received by the user plane network element via the first session.

In a possible implementation,
the transceiver module is further configured to receive the second identification information sent by the first network element; or
the transceiver module is further configured to receive the second identification information sent by a session management network element.

In a possible implementation, the data forwarding policy of the first session includes any one of the following: the user plane network element locally stores data of the first session, or the user plane network element forwards data of the first session to the first network element.

In a possible implementation,
the transceiver module is further configured to: when the data forwarding policy of the first session is that the user plane network element locally stores the data of the first session, receive a fifth message sent by the first network element, where the fifth message includes the second identification information; and
the transceiver module is further configured to send the first information to the first network element in response to the fifth message, where the first information is data determined by the user plane network element from locally stored data based on the second identification information.

In a possible implementation,
the transceiver module is further configured to: when the data forwarding policy of the first session is that the user plane network element forwards the data of the first session to the first network element, receive a third message sent by the session management network element, where the third message is used to request to create the first session, and the third message includes the second identification information;
the processing module is configured to determine, based on identification information of the first network element included in the third message, that a forwarding destination of the data of the first session is the first network element; and
the transceiver module is further configured to forward the first information from the terminal device to the first network element according to the data forwarding policy of the first session.

In a possible implementation,
the transceiver module is further configured to receive the first information sent by the terminal device, where the first information further includes seventh indication information, and the seventh indication information indicates the data forwarding policy of the first session.

According to a fourteenth aspect, an embodiment of this application provides a communication apparatus. The communication apparatus is used for a first network element, and the communication apparatus includes:
a transceiver module, configured to send a first request, where the first request includes second identification information, the first request indicates a user plane network element to report first information corresponding to the second identification information, and a first session is a session established between a terminal device and the first network element.

The transceiver module is further configured to receive the first information from the user plane network element, where the first information is transmitted in the first session, and the first information includes measurement information of the terminal device.

In a possible implementation,
the processing module is further configured to perform model training or model inference based on the first information.

In a possible implementation, the first request further includes identification information of the first network element, and the identification information of the first network element is used to determine a data forwarding policy of the first session.

In a possible implementation,
the transceiver module is further configured to send a fourth message to an access and mobility management network element, where the fourth message is used to request identification information of the terminal device that supports reporting of the first information; or
the transceiver module is further configured to send a fifth message to the user plane network element, where the fifth message is used to request the first information of the terminal device; or
the transceiver module is further configured to send a sixth message to a session management network element, where the sixth message is used to request the first information of the terminal device.

In a possible implementation,
the transceiver module is further configured to receive a third identifier set sent by the session management network element, where the third identifier set includes one or more identifiers, the identifiers included in the third identifier set indicate one or more user plane network elements, and the user plane network element indicated by the third identifier set corresponds to the terminal device that supports sending of the first information.

A fifteenth aspect of this application provides a communication apparatus. The apparatus may implement the method in any one of the first aspect or the possible implementations of the first aspect. The apparatus includes a corresponding unit or module configured to perform the method. The unit or module included in the apparatus may be implemented by software and/or hardware. For example, the apparatus may be a terminal device, or the apparatus may be a component (for example, a processor, a chip, or a chip system) in a terminal device, or the apparatus may be a logical module or software that can implement all or a part of a terminal device. The communication apparatus includes a transceiver module and a processing module. For example, the communication apparatus is a server having a terminal device.

A sixteenth aspect of this application provides a communication apparatus. The apparatus may implement the method in any one of the second aspect or the possible implementations of the second aspect. The apparatus includes a corresponding unit or module configured to perform the method. The unit or module included in the apparatus may be implemented by software and/or hardware. For example, the apparatus may be a terminal device, or the apparatus may be a component (for example, a processor, a chip, or a chip system) in a terminal device, or the apparatus may be a logical module or software that can implement all or a part of a terminal device. The communication apparatus includes a transceiver module and a processing module.

A seventeenth aspect of this application provides a communication apparatus. The apparatus may implement the method in any one of the third aspect or the possible implementations of the third aspect. The apparatus includes a corresponding unit or module configured to perform the method. The unit or module included in the apparatus may be implemented by software and/or hardware. For example, the apparatus may be an access and mobility management network element, or the apparatus may be a component (for example, a processor, a chip, or a chip system) in an access and mobility management network element, or the apparatus may be a logical module or software that can implement all or a part of an access and mobility management network element. The communication apparatus includes a transceiver module and a processing module.

An eighteenth aspect of this application provides a communication apparatus. The apparatus may implement the method in any one of the fourth aspect or the possible implementations of the fourth aspect. The apparatus includes a corresponding unit or module configured to perform the method. The unit or module included in the apparatus may be implemented by software and/or hardware. For example, the apparatus may be an access and mobility management network element, or the apparatus may be a component (for example, a processor, a chip, or a chip system) in an access and mobility management network element, or the apparatus may be a logical module or software that can implement all or a part of an access and mobility management network element. The communication apparatus includes a transceiver module and a processing module.

A nineteenth aspect of this application provides a communication apparatus. The apparatus may implement the method in any one of the fifth aspect or the possible implementations of the fifth aspect. The apparatus includes a corresponding unit or module configured to perform the method. The unit or module included in the apparatus may be implemented by software and/or hardware. For example, the apparatus may be a session management network element, or the apparatus may be a component (for example, a processor, a chip, or a chip system) in a session management network element, or the apparatus may be a logical module or software that can implement all or a part of a session management network element. The communication apparatus includes a transceiver module and a processing module.

A twentieth aspect of this application provides a communication apparatus. The apparatus may implement the method in any one of the sixth aspect or the possible implementations of the sixth aspect. The apparatus includes a corresponding unit or module configured to perform the method. The unit or module included in the apparatus may be implemented by software and/or hardware. For example, the apparatus may be a user plane network element, or the apparatus may be a component (for example, a processor, a chip, or a chip system) in a user plane network element, or the apparatus may be a logical module or software that can implement all or a part of a user plane network element. The communication apparatus includes a transceiver module and a processing module.

A twenty-first aspect of this application provides a communication apparatus. The apparatus may implement the method in any one of the seventh aspect or the possible implementations of the seventh aspect. The apparatus includes a corresponding unit or module configured to perform the method. The unit or module included in the apparatus may be implemented by software and/or hardware. For example, the apparatus may be a first network element, or the apparatus may be a component (for example, a processor, a chip, or a chip system) in a first network element, or the apparatus may be a logical module or software that can implement all or a part of a first network element. The communication apparatus includes a transceiver module and a processing module.

A twenty-second aspect of embodiments of this application provides a communication apparatus, including at least one processor. The at least one processor is coupled to a memory. The memory is configured to store a program or instructions. The at least one processor is configured to execute the program or the instructions, so that the apparatus implements the method in any possible implementation of the first aspect to the seventh aspect.

A twenty-third aspect of embodiments of this application provides a communication apparatus, including a communication interface, configured to input and/or output signaling or data; and a processor, configured to execute a computer-executable program, so that the apparatus implements the method in any possible implementation of the first aspect to the seventh aspect.

A twenty-fourth aspect of embodiments of this application provides a communication apparatus, including at least one logic circuit and an input/output interface. The input/output interface is configured to input or output information. The logic circuit is configured to perform the method in any possible implementation of the first aspect to the seventh aspect.

A twenty-fifth aspect of embodiments of this application provides a computer program product (or referred to as a computer program). When the computer program product is executed by a processor, the processor performs the method in the first aspect to the seventh aspect and any possible implementation of the first aspect to the seventh aspect.

A twenty-sixth aspect of embodiments of this application provides a chip system. The chip system includes at least one processor, configured to support a communication apparatus in implementing the method in the first aspect to the seventh aspect and any possible implementation of the first aspect to the seventh aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A twenty-seventh aspect of embodiments of this application provides a communication system. The communication system includes the communication apparatus in the eighth aspect, the communication apparatus in the ninth aspect, the communication apparatus in the tenth aspect, the communication apparatus in the eleventh aspect, the communication apparatus in the twelfth aspect, the communication apparatus in the thirteenth aspect, and/or the communication apparatus in the fourteenth aspect.

For technical effects achieved by any design of the eighth aspect to the twenty-seventh aspect, refer to the technical effects achieved by different implementations of the first aspect to the seventh aspect. Details are not described herein again.

### BRIEF DESCRIPTION OF DRAWINGS

FIG. 1 is a diagram of a communication system according to an embodiment of this application;
FIG. 2 is another diagram of a communication system according to an embodiment of this application;
FIG. 3 is another diagram of a communication system according to an embodiment of this application;
FIG. 4 is a schematic flowchart of an embodiment of a communication method according to an embodiment of this application;
FIG. 5A and FIG. 5B are another schematic flowchart of an embodiment of a communication method according to an embodiment of this application;
FIG. 6A and FIG. 6B are another schematic flowchart of an embodiment of a communication method according to an embodiment of this application;
FIG. 7A and FIG. 7B are another schematic flowchart of an embodiment of a communication method according to an embodiment of this application;
FIG. 8A and FIG. 8B are another schematic flowchart of an embodiment of a communication method according to an embodiment of this application;
FIG. 9A and FIG. 9B are another schematic flowchart of an embodiment of a communication method according to an embodiment of this application;
FIG. 10A and FIG. 10B are another schematic flowchart of an embodiment of a communication method according to an embodiment of this application;
FIG. 11 is another schematic flowchart of an embodiment of a communication method according to an embodiment of this application;
FIG. 12 is a diagram of a communication apparatus according to this application;
FIG. 13 is another diagram of a communication apparatus according to this application;
FIG. 14 is another diagram of a communication apparatus according to this application; and
FIG. 15 is another diagram of a communication apparatus according to this application.

### DESCRIPTION OF EMBODIMENTS

First, some terms in embodiments of this application are described for ease of understanding by a person skilled in the art.
(1) Terminal device: may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the Internet through a radio access network (radio access network, RAN). The terminal device may be a mobile terminal device such as a mobile telephone (also referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), an uncrewed aerial vehicle, or the like. Alternatively, the terminal device may be a wearable device and a terminal device in a next-generation communication system, for example, a terminal device in a 5G communication system or a terminal device in a future evolved public land mobile network (public land mobile network, PLMN).

(2) Network device: may be a device in a wireless network. For example, the network device may be a radio access network (radio access network, RAN) node (or device) through which the terminal device accesses the wireless network, and may also be referred to as a base station. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, an uncrewed aerial vehicle, a ground station device connected to the satellite, the airplane, the uncrewed aerial vehicle, and the like.

The network device can send configuration information (for example, carried in a scheduling message and/or an indication message) to the terminal device. The terminal device further performs network configuration based on the configuration information, so that network configurations of the network device and the terminal device are aligned. Alternatively, through a network configuration preset in the network device and a network configuration preset in the terminal device, the network configurations of the network device and the terminal device are aligned. Specifically, "alignment" means that when there is an exchanged message between the network device and the terminal device, the network device and the terminal device have a consistent understanding of a carrier frequency for sending and receiving the exchanged message, determining of a type of the exchanged message, a meaning of field information carried in the exchanged message, or another configuration of the exchanged message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

In embodiments of this application, an apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is the network device.

(3) Configuration and preconfiguration: In this application, both configuration and preconfiguration are used. The configuration means that a network device sends configuration information of some parameters or parameter values to a terminal device by using a message or signaling, so that the terminal device determines a communication parameter or a transmission resource based on the values or the information. Similar to the configuration, the preconfiguration may be parameter information or a parameter value negotiated by the network device and the terminal device in advance, may be parameter information or a parameter value used by the network device or the terminal device as specified in a standard protocol, or may be parameter information or a parameter value pre-stored in the network device or the terminal device. This is not limited in this application.

Further, these values and parameters may be changed or updated.

(4) Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device serves as a configuration information sending entity, and the terminal device serves as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active state (ACTIVE), or may be applied to a terminal device in a non-connected state (INACTIVE) or an idle state (IDLE).

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application.

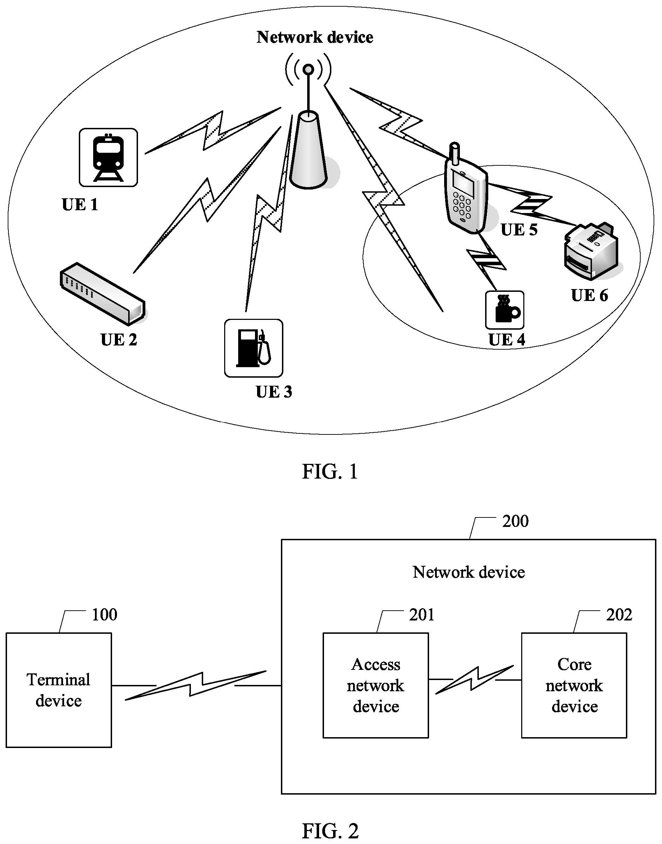

FIG. 1 is a diagram of a communication system according to an embodiment of this application. As shown in FIG. 1, a configuration information sending entity may be a network device, and a configuration information receiving entity may be UE 1 to UE 6. In this case, the network device and the UE 1 to the UE 6 form a communication system. In the communication system, the UE 1 to the UE 6 may send uplink data to the network device, and the network device needs to receive the uplink data sent by the UE 1 to the UE 6. In addition, the network device may send configuration information to the UE 1 to the UE 6.

FIG. 2 is another diagram of a communication system according to an embodiment of this application. As shown in FIG. 2, the communication system includes a terminal device 100 and a network device 200. The network device 200 may include an access network device 201 and a core network device 202. The terminal device 100 and the access network device 201 may communicate with each other over a wireless link. The access network device 201 and the core network device 202 may communicate with each other. In other words, the terminal device 100 may communicate with the access network device 201 and/or the core network device 202.

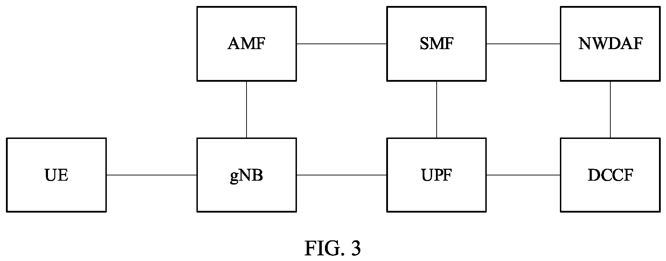

In an implementation example of the communication system shown in FIG. 2, the communication system may be a 5G network system. As shown in FIG. 3, the terminal device 100 in FIG. 2 may include UE including an application (application, APP) in FIG. 3, the access network device 201 in FIG. 2 may include a gNB in FIG. 3, and the core network device 202 in FIG. 2 may include an access and mobility management function (access and mobility management function, AMF) network element, a session management function (session management function, SMF) network element, a user plane function (user plane function, UPF) network element, a network data analytics function (network data analytics function, NWDAF) network element, a data collection coordination function (data collection coordination function, DCCF) network element, and the like in FIG. 3.

The following separately describes the devices or the network elements shown in FIG. 3.

Access and mobility management network element (or referred to as an access and mobility management function): is mainly used in attach, mobility management, and tracking area update procedures of terminals in a mobile network. The access management network element terminates a non-access stratum (non-access stratum, NAS) message, completes registration management, connection management, reachability management, tracking area list (track area list, TA list) allocation, mobility management, and the like, and transparently routes a session management (session management, SM) message to a session management network element. In a 5th generation (5th generation, 5G) communication system, the access management network element may be an access and mobility management function (access and mobility management function, AMF). It may be understood that with the evolution of communication technologies, the access and mobility management network element may use another name or include another network element. This is not limited in embodiments of this application.

Session management network element (or referred to as a session management function): is mainly used for session management in a mobile network, for example, session establishment, modification, and release. Specific functions are, for example, allocating an Internet protocol (Internet protocol, IP) address to a terminal, and selecting a user plane network element that provides a packet forwarding function. In the 5G communication system, the session management network element may be a session management function (session management function, SMF). It may be understood that with the evolution of communication technologies, the session management network element may use another name or include another network element. This is not limited in embodiments of this application.

Data analytics network element: collects data from each network function NF (Network Function, that is, the AMF, the SMF, or the like) and performs analysis and prediction, and may collect data via a network exposure function NEF (Network Exposure Function) or directly from an application function AF (Application Function) and an OAM (operation, administration, and maintenance, operation, administration, and maintenance) system and perform analysis processing and prediction. In the 5G communication system, the data analytics network element may be an NWDAF network element or a system related to a management data analytics system (management data analytics system, MDAS). It may be understood that with the evolution of communication technologies, the data analytics network element may use another name or include another network element. This is not limited in embodiments of this application.

User plane network element: is mainly responsible for processing a user packet, for example, forwarding, charging, or lawful interception. The user plane network element may also be referred to as a protocol data unit (protocol data unit, PDU) session anchor (PDU session anchor, PSA). In the 5G communication system, the user plane network element may be a user plane function (user plane function, UPF) network element. The UPF may directly communicate with the NWDAF through an interface similar to a service-based interface, or may communicate with the NWDAF through other means, for example, via the SMF network element or through a private interface or an internal interface between the UPF and the NWDAF network element. It may be understood that with the evolution of communication technologies, the user plane network element may use another name or include another network element. This is not limited in embodiments of this application.

It may be understood that servitization enables a core network to form a flattened architecture. Through a control plane signaling bus, control plane network function entities of a same network slice may discover each other via a network repository function (Network Repository Function, NRF), obtain access address information of each other, and then directly communicate with each other through the control plane signaling bus.

In addition to the foregoing service-based control plane network function entities, this application may further relate to the following devices or network elements.

Data collection application function: is an application server deployed on a network side, and receives measurement information transmitted by a terminal device through a network connection. The data collection application function may be an independent data collection coordination function or a data collection application function (data collection application function, DCAF) network element, or may be a data collection unit module inside the NWDAF network element, or may be a data collection unit module inside the UPF network element. It may be understood that with the evolution of communication technologies, the data collection application function may further include another network element. This is not limited in embodiments of this application.

Terminal network status data collection application: as an application client program running on a terminal device, reads measurement information of a wireless link of the terminal device in real time, and reports the measurement information as a communication quality parameter of the terminal device to the data collection application function through a network connection.

Network exposure function (not shown in FIG. 3): A network operator may deploy the network exposure function (network exposure function, NEF) to isolate a third-party application function from a network function. When the data collection application function is a server deployed by a third party, the data collection application function needs to communicate with the foregoing network function such as the AMF, the SMF, or the UPF via the NEF.

The rapid development of artificial intelligence and big data analysis provides basic technologies for network intelligence in a communication system (for example, the communication system shown in FIG. 1, FIG. 2, or FIG. 3). The NWDAF network element and the system that is related to the MDAS are defined to implement mobile network intelligence. The NWDAF or the MDAS provides an intelligent analysis service and outputs an analysis result in a form defined in specifications through artificial intelligence and big data analysis. The output analysis result usually includes two forms: statistical analysis of historical data and prediction of future data. A network element that processes a service adjusts a network based on an output of the NWDAF to optimize network running. For example, a service network element finds, based on a statistical analysis result output by the NWDAF, that a packet loss rate of service packet transmission that is being performed by the terminal exceeds a threshold, affecting service experience, and takes a corresponding measure, for example, increases a ratio of retransmitted packets, or attempts to improve service experience. Actually, there are a plurality of possible reasons for an increase in the packet loss rate during packet transmission. For example, a first reason may be that the packet loss rate increases due to poor wireless coverage at a location of the terminal and poor wireless link quality. For another example, a second reason may be that a service volume in a current area is large, and wireless devices are temporarily congested, resulting in no link resource available for transmitting some service packets and causing packet loss. For the first reason, increasing the ratio of retransmitted packets can improve service experience. However, for the second reason, increasing the ratio of retransmitted packets only exacerbates congestion of the wireless devices. As a result, more packets are lost and service experience continues to deteriorate. Therefore, a wireless status of the terminal needs to be analyzed and obtained before a correct measure is taken. For example, during network congestion, resolution can be reduced to reduce an application bandwidth, and packet loss caused by weak wireless signals or interference can be reduced by increasing retransmission.

The basis for the NWDAF network element to perform analysis may include network information of the terminal device obtained from operation, administration, and maintenance (operation, administration, and maintenance, OAM). Generally, the network information collected by the OAM is cell-level network information, for example, network information of all terminal devices within a service range of one or more cells. However, the network information of the terminal device obtained by the NWDAF network element from the OAM is not original data reported by the terminal device, but information processed by another device (including but not limited to the OAM, an access network device, and the like), and cannot accurately reflect a real-time wireless status of a specific terminal device. Consequently, a correct measure cannot be taken in time based on a network status of the terminal device.

Because there are many defects in obtaining the network information of the terminal device from the OAM, the current data collection application function such as the NWDAF network element or the DCCF network element may send address information of the data collection application function to the terminal device. Therefore, the terminal device establishes a user plane connection to the data collection application function such as the NWDAF network element or the DCCF network element, so that the terminal device reports measurement information through the user plane connection. However, the data collection application function such as the NWDAF network element or the DCCF network element sends the address information of the data collection application function to the terminal device. This is not conducive to security and privacy protection of a core network device, is not conducive to hiding an internal network element topology of a core network, and affects network security.

Based on this, an embodiment of this application provides a communication method. A terminal device sends first information to a first network element in a first session associated with first identification information, where the first information includes measurement information of the terminal device, and the first information is used by a network element (for example, a network data analytics function) in a core network to perform data analysis, model inference, or model training processing. The terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of a core network, and improve network security. In addition, the first session is used to collect the first information for the first network element, and the first session is a data collection session. Compared with reporting measurement information via signaling, in this application, the measurement information is reported via a user plane, so that signaling overheads can be effectively reduced, an amount of transmission data in the measurement information of the terminal device can be increased, and a network throughput can be improved.

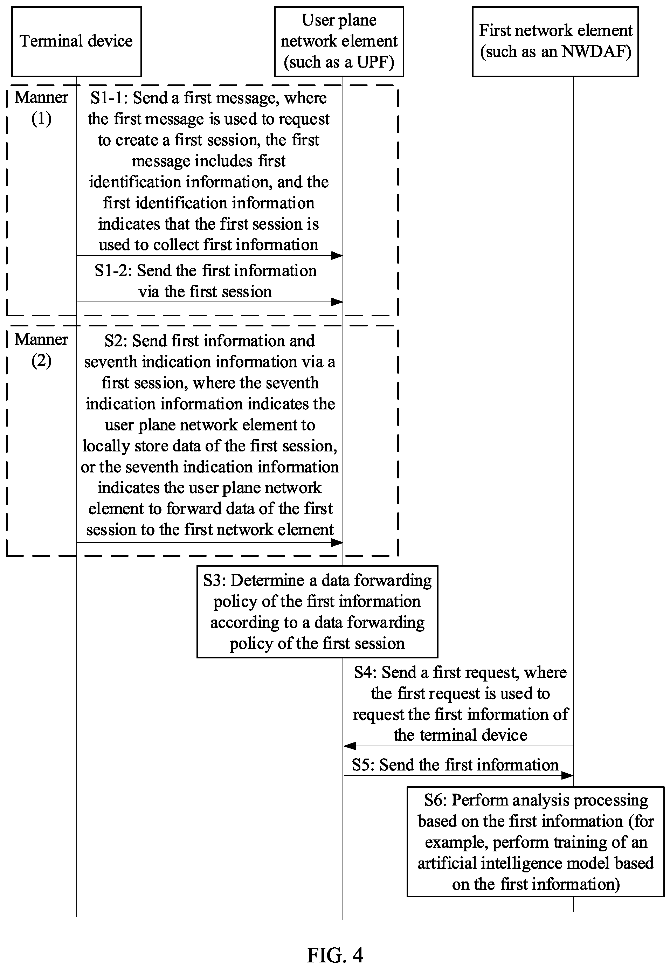

The following describes embodiments of this application with reference to the accompanying drawings. FIG. 4 is a schematic flowchart of an embodiment of a communication method according to an embodiment of this application. The communication method provided in this embodiment of this application includes the following steps.

First, a terminal device may specifically send first information to a first network element via a first session in two manners: Manner (1): When the first session is created or modified, the first session is associated with first identification information, where the first identification information indicates that the first session is used to collect the first information. Manner (2): When the terminal device sends the first information to a user plane network element via the first session, the first information further includes seventh indication information, and the seventh indication information indicates the user plane network element to locally store (or locally cache) data of the first session, or the seventh indication information indicates the user plane network element to forward data of the first session to the first network element.

It should be noted that the first network element in this embodiment of this application includes a data collection network element and/or a data analytics network element. The data collection network element is configured to collect data and forward the data to the data analytics network element. The data analytics network element is configured to perform data analysis, model inference, and/or model training processing. For example, the data collection network element may be a data collection coordination function (DCCF) network element, or a data collection application function (DCAF) network element. For example, the data analytics network element may be an NWDAF network element or a system related to a management data analytics system (MDAS). In a possible implementation, the first network element includes only the data collection network element, the network further includes the data analytics network element, and after receiving the first information, the first network element forwards the first information to the data analytics network element.

### Manner (1):

S1-1: The terminal device sends a first message, where the first message is used to request to create the first session, the first message includes the first identification information, and the first identification information indicates that the first session is used to collect the first information.

In step S1-1, the terminal device sends the first message to a network side, where the first message is used to request to create or modify the first session. The first message includes the first identification information, and the first identification information indicates that the first session is used to collect the first information for the first network element.

The first message may be a non-access stratum request message, and a non-access stratum is mainly used for connection and mobility control between the terminal device and an access and mobility management network element. A non-access stratum message includes an exchanged message between the terminal device and the access and mobility management network element, for example, a mobility and connection procedure message such as attach, bearer setup, or service request. The first message in this embodiment of this application is, for example, a "PDU Session Establishment" message.

The first identification information includes but is not limited to a data network name (data network name, DNN), single network slice selection assistance information (single network slice selection assistance information, S-NSSAI), or a session identifier. The data network name is used to identify a data network. The data network name is carried in a session creation request message, to indicate a data network that the session requests to access, so as to implement data isolation. The network slice selection assistance information may be used to identify a network slice. The session identifier includes but is not limited to identification information of a protocol data unit (protocol data unit, PDU) session.

For example, the first identification information is the DNN. The first identification information may be information locally configured by the terminal device. The terminal device and the network side pre-agree on sessions that are indicated by specific DNNs and used to collect the first information for the first network element. These DNNs is preconfigured in the terminal device.

Alternatively, the first identification information may be information delivered by the network side to the terminal device. For example, the first identification information is allocated by the access and mobility management network element to the terminal device when the terminal device accesses a network. The access and mobility management network element may obtain subscription information of the terminal device from a unified data management (unified data management, UDM) function. The subscription information of the terminal device may be information allocated by a network service provider (for example, an operator) to the terminal device, and the subscription information of the terminal device may include the first identification information. The access and mobility management network element may obtain the first identification information from the subscription information of the terminal device.

Alternatively, the first identification information may be identification information randomly generated by the terminal device. In this case, the first message carries eighth indication information, and the eighth indication information indicates that the first identification information included in the first message indicates that the first session is used to collect the first information. The network side replaces, based on the eighth indication information, the first identification information with second identification information that can be identified by the network side, where the second identification information indicates that the first session is used to collect the first information.

The first information includes measurement information of the terminal device. The first information includes but is not limited to: a power delay profile (power delay profile, PDP), a channel energy response (channel energy response, CER), a committed information rate (channel impulse response, CIR), a measurement parameter of a reference signal, an index of a synchronization signal and PBCH block (synchronization signal and PBCH block, SSB), where the reference signal includes at least one of the following: a sounding reference signal (sounding reference signal, SRS) or a channel state information-reference signal (channel state information-reference signal, CSI-RS), a reference signal received power (reference signal receiving power, RSRP), reference signal received quality (reference signal receiving quality, RSRQ), a signal to interference plus noise ratio (signal to interference plus noise ratio, SINR), or quality of service (quality of service, QoS) statistical information of the terminal device, where the QoS statistical information includes at least one of the following: a maximum traffic rate, an average traffic rate, a minimum traffic rate, a maximum packet delay, a minimum packet delay, an average packet delay, a bit error rate, or a packet loss rate.

For example, the first session may be a PDU session.

In a possible example, the terminal device sends a first message to an access network device. After receiving the first message, the access network device forwards the first message to the access and mobility management network element, to trigger a procedure of creating or modifying the first session. Correspondingly, the access and mobility management network element sends a second message to a session management network element, where the second message is used to request to create or modify the first session, the second message includes the second identification information, and the second identification information indicates that the first session is used to collect the first information. Correspondingly, the session management network element sends a third message to a user plane network element in response to the second message, where the third message is used to request to create the first session, and the third message includes the second identification information.

S1-2: The terminal device sends the first information via the first session.

After step S1-1, step S1-2 is performed. In step S1-1, the terminal device creates or modifies the first session. Then, in step S1-2, the terminal device sends the first information via the first session. For example, the terminal device sends the first information to the first network element via the first session.

Step S3 is performed after step S1-2.

### Manner (2):

S2: The terminal device sends the first information and the seventh indication information via the first session, where the seventh indication information indicates the user plane network element to locally store the data of the first session, or the seventh indication information indicates the user plane network element to forward the data of the first session to the first network element.

In step S2, in a possible implementation, when the terminal device sends the first information to the user plane network element via the first session, the first information further includes the seventh indication information, and the seventh indication information is used to identify that the first information needs to be forwarded to the first network element. For example, a packet carrying the first information carries the seventh indication information. Then, the user plane network element determines a data forwarding policy of the first session (or determines a data forwarding policy of the first information or a data processing policy of the first information) based on the seventh indication information. The user plane network element locally caches the first information or forwards the first information to the first network element based on the seventh indication information.

In another possible implementation, when the terminal device sends the first information to the user plane network element via the first session, the terminal device sends the seventh indication information to the user plane network element via the first session, where the seventh indication information and the first information are independent of each other in the first session. The user plane network element determines, based on the seventh indication information, to locally cache the first information transmitted in the first session, or forward the first information to the first network element.

Optionally, the first session is a user plane connection established between the terminal device and the user plane network element, and other information may be forwarded via the first session between the terminal device and the user plane network element. In other words, in this case, the first session is not a dedicated session of the first information.

Optionally, the seventh indication information may be used to identify that the first information is measurement information of the terminal device. The user plane network element preconfigures that the measurement information of the terminal device needs to be locally cached or forwarded to the first network element. After receiving the first information, the user plane network element locally caches the first information or forwards the first information to the first network element based on the seventh indication information included in the first information.

Optionally, the seventh indication information may further include identification information of the first network element, so that the user plane network element determines that the first information corresponding to the seventh indication information needs to be forwarded to the first network element.

For example, the first information includes a newly added field. When the newly added field is "00", the user plane network element is indicated to normally forward data in a session for carrying the newly added field. When the newly added field is "01", the user plane network element is indicated to locally store (or locally cache) data in a session for carrying the newly added field. When the newly added field is "11", the user plane network element is indicated to forward, to the first network element, data in a session for carrying the newly added field.

In another example, the first information includes a newly added field, and the newly added field carries the seventh indication information. When the seventh indication information is "01", it indicates that the first information needs to be locally stored (or locally cached) by the user plane network element, or it indicates that the first information needs to be forwarded by the user plane network element to the first network element.

In another possible implementation, in step S2, the terminal device sends the first information via the first session, and the terminal device may also send the seventh indication information separately.

Step S3 is performed after step S2.

It may be understood that the foregoing manner (1) and manner (2) may alternatively be performed simultaneously.

S3: The user plane network element determines the data forwarding policy of the first information according to the data forwarding policy of the first session.

In step S3, the user plane network element may determine the data forwarding policy of the first session in a plurality of manners. In an example, a session management network element determines, in a procedure of creating or modifying the first session, that the first session is associated with the first identification information. Because the first identification information indicates that the first session is used to collect the first information, that the session management network element determines the data forwarding policy of the first session based on the first identification information includes: The user plane network element forwards the data of the first session to the first network element, or the user plane network element locally stores (or locally caches) the data of the first session.

In another example, the user plane network element determines the data forwarding policy of the first session based on the seventh indication information.

S4: The first network element sends a first request, where the first request is used to request the first information of the terminal device.

In step S4, when the first network element needs to use the first information, the first network element sends the first request to another network element (for example, an access and mobility management network element, the session management network element, or the user plane network element), where the first request includes the second identification information, and the first request indicates the user plane network element to report the first information corresponding to the second identification information.

In a possible example, the first network element sends a fourth message to the access and mobility management network element, where the fourth message is used to request identification information of the terminal device that supports reporting of the first information. The access and mobility management network element sends a first identifier set to the first network element in response to the fourth message. In this embodiment of this application, for ease of description, a set of identification information of terminal devices that support reporting of the first information is referred to as the first identifier set, the first identifier set includes one or more pieces of identification information, and the identification information included in the first identifier set indicates the terminal device that supports reporting of the first information.

Then, the first network element sends a sixth message to the session management network element, where the sixth message includes the first identifier set, so that the session management network element feeds back, to the first network element based on the first identifier set included in the sixth message, identification information of the user plane network element corresponding to support for reporting of the first information and/or the second identification information.

Then, the first network element sends a fifth message to the user plane network element (the user plane network element corresponding to the identification information of the user plane network element fed back by the session management network element) based on the identification information of the user plane network element and/or the second identification information that are/is fed back by the session management network element, where the fifth message includes the identification information of the terminal device requested to report the first information and/or the second identification information, so that the user plane network element reports the first information to the first network element based on the second identification information and/or the identification information of the terminal device.

Optionally, the access and mobility management network element sends identification information of the session management network element to the first network element in response to the fourth message, where the session management network element has an association relationship with the terminal device that supports reporting of the first information.

In the foregoing example, the first session may have been established between the terminal device and the user plane network element. The terminal device may report the first information via the first session based on third indication information delivered by a network side. Alternatively, after the first session is established, the terminal device may directly report the first information via the first session.

In the foregoing example, the first session may not be established between the terminal device and the user plane network element. The terminal device creates the first session based on third indication information delivered by a network side.

The third indication information may be carried in a plurality of messages. The fourth message sent by the first network element to the access and mobility management network element further includes the third indication information. The access and mobility management network element delivers the third indication information to the terminal device based on the fourth message. For example, the third indication information is carried in an "N2 message" message sent by the access and mobility management network element to the terminal device. For another example, after receiving a registration request (registration request) message sent by the terminal device, the access and mobility management network element sends the third indication information to the terminal device by using a registration accept (Registration accept) response message.

Optionally, the access and mobility management network element notifies the terminal device to report the first information, or the access and mobility management network element notifies, in response to the fourth message, the session management network element that the session management network element notifies the user plane network element to report the first information to the first network element, or that the session management network element feeds back the identification information of the user plane network element to the first network element, and the first network element may obtain the first information from the user plane network element that is fed back.

In another possible example, the first network element sends a fifth message to the user plane network element, where the fifth message is used to request the first information of the terminal device. The user plane network element reports the first information to the first network element in response to the fifth message.

In another possible example, the first network element sends a sixth message to the session management network element, where the sixth message is used to request the first information of the terminal device. The session management network element notifies, in response to the sixth message, the user plane network element to report the first information to the first network element. Alternatively, the session management network element feeds back the identification information of the user plane network element to the first network element in response to the sixth message, and the first network element may obtain the first information from the user plane network element that is fed back.

It should be noted that a sequence of performing step S4, and the foregoing steps S1-1 and S1-2, the foregoing step S2, and the foregoing step S3 is not limited.

S5: The user plane network element sends the first information to the first network element.

In step S5, after determining the data forwarding policy of the first information, the user plane network element sends the first information to the first network element according to the data forwarding policy of the first information.

In a possible implementation, the data forwarding policy of the first session includes: The user plane network element locally stores the data of the first session. The data forwarding policy of the first information is that the user plane network element locally stores the first information. The user plane network element sends the first information to the first network element in response to the first request of the first network element.

In another possible implementation, the data forwarding policy of the first session includes: The user plane network element forwards the data of the first session to the first network element. The data forwarding policy of the first information is that the user plane network element forwards the first information to the first network element. After the user plane network element receives the first information sent by the terminal device via the first session, the user plane network element sends the first information to the first network element, that is, the user plane network element does not locally store the first information.

S6: The first network element performs analysis processing based on the first information (for example, performs model training or model inference of an artificial intelligence model based on the first information).

In step S6, after receiving the first information, the first network element performs analysis processing based on the first information. Specific analysis processing is not limited in this embodiment of this application. For example, the first network element may perform model training or model inference of the artificial intelligence model based on the first information. Model training or model inference of the artificial intelligence model may be specifically model training or model inference of an air interface artificial intelligence model. For another example, the first network element may evaluate a service of the terminal device based on the first information. For another example, the first network element may construct a service profile of the terminal device based on the first information, and further determine a service path, a quality of service requirement, quality of experience (quality of experience, QoE), or the like of a service related to the terminal device.

In another possible implementation, the first network element performs only data collection processing. After receiving the first information, the first network element may forward the first information to a data processing network element, and the data processing network element performs analysis processing based on the first information. For example, the data processing network element performs model training or model inference of the artificial intelligence model based on the first information.

In this embodiment of this application, the terminal device sends the first information to the first network element in the first session associated with the first identification information, where the first information includes the measurement information of the terminal device, and the first information is used by a network element (for example, a network data analytics function) in a core network to perform data analysis, model inference, or model training processing. The terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of the core network, and improve network security. In addition, the first session is used to collect the first information, and the first session is a data collection session. Compared with reporting the measurement information via signaling, in this application, the measurement information is reported via a user plane, so that signaling overheads can be effectively reduced, an amount of transmission data in the measurement information of the terminal device can be increased, and a network throughput can be improved.

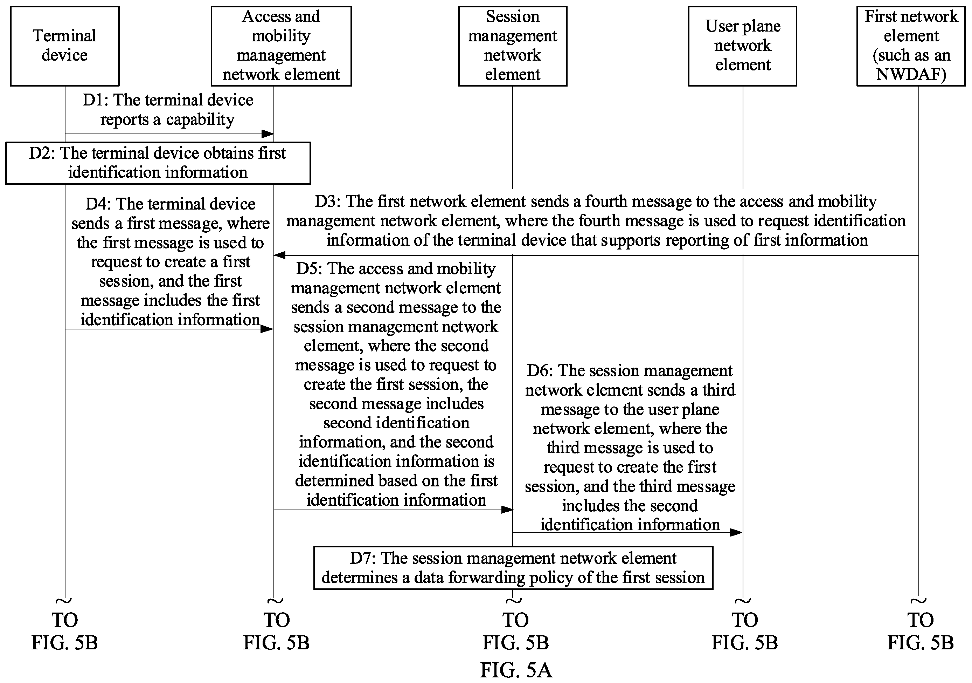

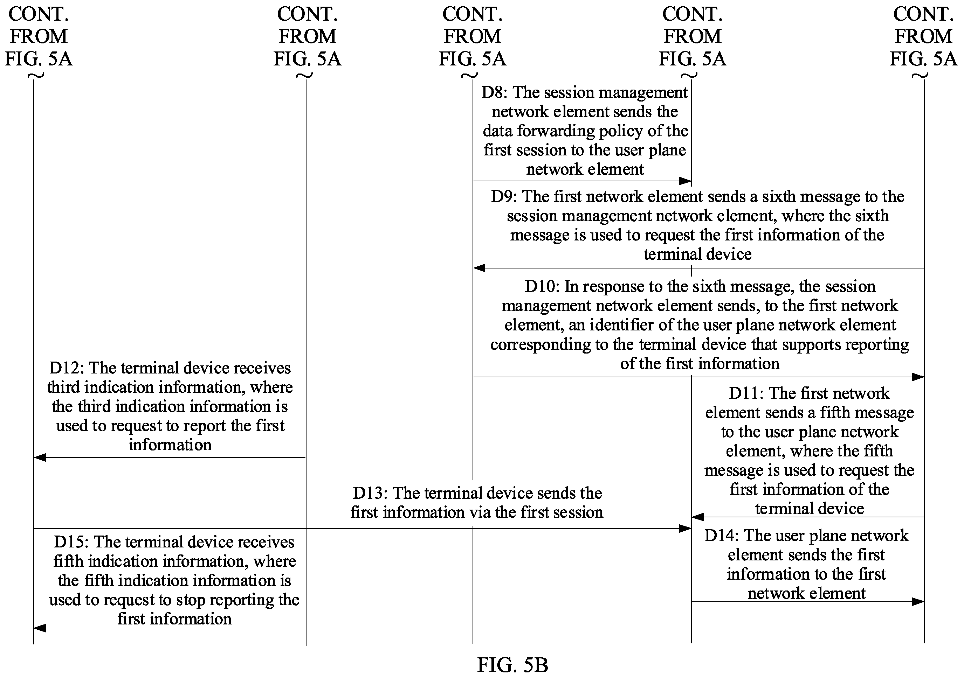

With reference to the foregoing embodiment, the following describes another embodiment provided in this application. FIG. 5A and FIG. 5B are another schematic flowchart of an embodiment of a communication method according to an embodiment of this application. The communication method provided in this embodiment of this application further includes the following steps.

D1: A terminal device reports a capability.

In step D1, the terminal device reports the capability to a network side, where the reported capability indicates whether the terminal device supports reporting of first information. Optionally, if the terminal device supports reporting of the first information to the network side, the terminal device may further report, to the network side, an information type of the first information supported to be reported by the terminal device.

In a possible implementation, the terminal device reports the capability to the network side when accessing a network.

In another possible implementation, when a first network element needs to obtain the first information, or a first network element enables an analysis processing function (for example, enables an artificial intelligence model training or model inference function), or a data processing network element needs the first information and requests the first information from a first network element (only for data collection processing), the first network element sends a first request to another network element. In response to the first request, the network side requests the terminal device to report the capability. In this case, the terminal device reports the capability to the network side.

In an example, the terminal device sends first indication information to an access and mobility management network element via an access network device, where the first indication information indicates that the terminal device supports reporting of the first information.

In another example, the terminal device sends second indication information to an access and mobility management network element via an access network device, where the second indication information indicates the information type of the first information supported to be reported by the terminal device. For example, the second indication information indicates that the terminal device supports reporting of a measurement parameter of a reference signal and an index of a synchronization signal and PBCH block.

For example, the terminal device initiates a registration procedure to the access and mobility management network element, and the terminal device sends a registration request to the access and mobility management network element, where the registration request carries the first indication information and/or the second indication information. For example, the registration request may be a "registration request" message.

D2: The terminal device obtains first identification information.

In step D2, the terminal device may obtain the first identification information in a plurality of manners, which are separately described below.

In a possible implementation, the terminal device receives the first identification information allocated by the network side. For example, the registration request sent by the terminal device to the access and mobility management network element carries the first indication information and/or the second indication information. In response to the registration request, the access and mobility management network element obtains the first identification information, and then the access and mobility management network element sends a registration accept message to the terminal device, where the registration accept message includes the first identification information. For example, the registration accept message may be a "registration accept" message. For example, the access and mobility management network element obtains, from subscription information of the terminal device (where the subscription information of the terminal device is obtained from a user plane network element), the first identification information that may be allocated to the terminal device. For another example, the access and mobility management network element obtains, from a policy control function (PCF) network element, the first identification information that may be allocated to the terminal device. For another example, the access and mobility management network element obtains the first identification information (or second identification information) from a fourth message sent by the first network element. The first network element sends the fourth message to the access and mobility management network element, where the fourth message is used to request the first information of the terminal device, and the fourth message includes the first identification information (or the second identification information). The access and mobility management network element determines, based on the fourth message, the first identification information (or the second identification information) that may be allocated to the terminal device, and then allocates the first identification information (or the second identification information) to the terminal device.

In another possible implementation, the first identification information is preconfigured in the terminal device, and the terminal device obtains the first identification information from a local configuration.

In another possible implementation, the terminal device randomly generates the first identification information. In this case, a first message sent by the terminal device further needs to include eighth indication information, and the eighth indication information indicates that the first identification information included in the first message indicates that a first session is used to collect the first information.

D3: The first network element sends a fourth message to the access and mobility management network element, where the fourth message is used to request identification information of the terminal device that supports reporting of the first information.

In step D3, when the first network element needs to use the first information, the first network element sends the fourth message to the access and mobility management network element, where the fourth message is used to request the identification information of the terminal device that supports reporting of the first information.

In a possible implementation, the fourth message may be used to request the identification information of the terminal device that supports reporting of the first information. Then, the access and mobility management network element sends a first identifier set to the first network element in response to the fourth message, where the first identifier set includes one or more pieces of identification information, and the identification information included in the first identifier set indicates the terminal device that supports reporting of the first information.

In another possible implementation, the fourth message includes the first identification information, and the fourth message may be used to request identification information of a terminal device that supports the first identification information. The terminal device that supports the first identification information may create the first session associated with the first identification information, and then the terminal device sends the first information to the user plane network element via the first session. Then, the access and mobility management network element sends a first identifier set to the first network element in response to the fourth message, where the first identifier set includes one or more pieces of identification information, and the identification information included in the first identifier set indicates the terminal device that supports the first identification information.

In another possible implementation, the fourth message includes ninth indication information, and the ninth indication information indicates the terminal device that supports reporting of the first information. The access and mobility management network element finds, based on the ninth indication information, terminal devices that support reporting of the first information from one or more terminal devices managed by the access and mobility management network element, and then determines the first identifier set based on identification information of the terminal devices.

In another possible implementation, the fourth message includes tenth indication information, and the tenth indication information indicates an information type of the first information. The access and mobility management network element finds, based on the tenth indication information from one or more terminal devices managed by the access and mobility management network element, terminal devices that support reporting of the first information indicated by the tenth indication information, and then determines the first identifier set based on identification information of the terminal devices.

The fourth message may specifically include one or more of the following information: the identification information of the terminal device, the first identification information, third indication information, or fourth indication information. The third indication information is used to request to report the first information, and the fourth indication information indicates an information type of the first information requested to be reported.

The first identification information (or the second identification information) included in the fourth message indicates that the first network element needs the first information associated with the first identification information (or the second identification information). For example, the first information that may be reported by UE includes a power delay profile PDP, a channel energy response CER, a committed information rate CIR, a reference signal received power RSRP, and quality of service QoS statistical information of the terminal device. The first identification information obtained by the terminal device includes a DNN #1, a DNN #2, and a DNN #3. The terminal device and the network side agree that data requested by the DNN #1 includes the power delay profile PDP, the channel energy response CER, and the committed information rate CIR, data requested by the DNN #2 includes the reference signal received power RSRP, and data requested by the DNN #3 includes the quality of service QoS statistical information of the terminal device. Correspondingly, when the fourth message includes the DNN #1, the first information of the terminal device requested by the first network element to be reported includes the power delay profile PDP, the channel energy response CER, and the committed information rate CIR. When the fourth message includes the DNN #2, the first information of the terminal device requested by the first network element to be reported includes the reference signal received power RSRP. When the fourth message includes the DNN #3, the first information of the terminal device requested by the first network element to be reported includes the quality of service QoS statistical information of the terminal device.

Optionally, the fourth message further includes the third indication information and/or the fourth indication information, the third indication information is used to request the terminal device to report the first information, and the fourth indication information indicates the information type of the first information that the terminal device is requested to report.

Optionally, the fourth message is further used to request the access and mobility management network element to report identification information of a session management network element corresponding to the terminal device that supports reporting of the first information. For ease of description, the identification information of the session management network element corresponding to the session management network element corresponding to the terminal device indicated by the first identifier set is referred to as a second identifier set. The second identifier set includes one or more pieces of identification information, and the identification information included in the second identifier set indicates the session management network element corresponding to the terminal device that supports reporting of the first information. In other words, the fourth message is further used to request the access and mobility management network element to report the second identifier set. Correspondingly, the access and mobility management network element sends the second identifier set to the first network element in response to the fourth message.

Optionally, the fourth message further includes identification information of the first network element, so that the access and mobility management network element forwards the identification information of the first network element to the user plane network element. After receiving the first information sent by the terminal device via the first session, the user plane network element forwards the first information to the first network element based on the identification information of the first network element.

Optionally, the fourth message further includes the identification information of the terminal device, and then the access and mobility management network element determines, based on the identification information of the terminal device, specific terminal devices that need to be indicated to report the first information.

In an example, the fourth message is an "Namf_EventExposure_Subscribe/notify" message. An "Event ID" field in the fourth message is set to the first identification information.

It should be noted that a sequence of performing step D3 and the foregoing steps D1 and D2 is not limited.

D4: The terminal device sends a first message, where the first message is used to request to create the first session, and the first message includes the first identification information.

In step D4, the terminal device sends the first message to the access and mobility management network element, where the first message is used to request to create or modify the first session. The first message includes the first identification information, and the first identification information indicates that the first session is used to collect the first information for the first network element. The first message may be a non-access stratum request message, for example, a "PDU Session Establishment" message. For the first message, refer to step S1-1. Details are not described herein again.

In an example, a "UE Requested DNN" field in the first message is set to the first identification information. The "UE Requested DNN" field indicates a name of a data network that the terminal device wants to access via the first session, and the terminal device establishes the first session with the data network that the terminal device wants to access.

D5: The access and mobility management network element sends a second message to the session management network element, where the second message is used to request to create the first session, the second message includes the second identification information, and the second identification information is determined based on the first identification information.

In step D5, in a possible implementation, the access and mobility management network element determines, in response to the first message based on the first identification information included in the first message, that the first session requested to be established by using the first message is used to report the first information to the first network element. Specifically, the access and mobility management network element locally maintains a fourth identifier set (or obtains, from the subscription information of the terminal device, the first identification information that may be allocated to the terminal device). The fourth identifier set includes one or more pieces of identification information, and the identification information included in the fourth identifier set indicates that a session corresponding to the identification information is used to collect the first information for the first network element. After receiving the first message, the access and mobility management network element extracts the first identification information from the first message, and then detects whether the first identification information is recorded in the fourth identifier set; and if the first identification information exists in the fourth identifier set, the first identification information is used to identify the first session and indicates that the first session is used to collect the first information for the first network element; or if the first identification information does not exist in the fourth identifier set, the first session is not used to collect the first information for the first network element, and the first message is processed based on a normal service procedure; or if the first identification information is unavailable, and the first message further includes eighth indication information, where the eighth indication information indicates that the first identification information included in the first message is used to identify the first session and identify that the first session is used to collect the first information, the second identification information is obtained.

In another possible implementation, in response to the first message, the access and mobility management network element detects whether the first message includes the eighth indication information. If the first message includes the eighth indication information, it is considered that the first identification information is used to identify the first session and indicates that the first session is used to collect the first information for the first network element. In this case, if the first indication information does not belong to the fourth identifier set, the access and mobility management network element allocates, from the fourth identifier set, identification information to the first message, which is referred to as the second identification information. The second identification information is used to identify the first session and indicates that the first session is used to collect the first information for the first network element.

After the access and mobility management network element determines that the first session is used to collect the first information for the first network element, the access and mobility management network element sends the second message to the session management network element, where the second message is used to request to create or modify the first session, the second message includes the second identification information, and the second identification information is determined based on the first identification information. For example, when the first identification information belongs to the fourth identifier set, the second identification information is the same as the first identification information. For another example, when the first identification information does not belong to the fourth identifier set, the second identification information is identification information obtained by the access and mobility management network element from the fourth identifier set.

For example, the second message is an "Nsmf_PDUSession_CreateSMContext Request" message. A "selected DNN" field in the second message includes the second identification information, and a "UE request DNN" field in the second message includes the first identification information.

In a possible example scenario, the terminal device randomly generates the first identification information, and the first message further includes the eighth indication information. The access and mobility management network element finds that a session management function that supports the first identification information cannot be selected for the terminal device, and the access and mobility management network element determines, based on the eighth indication information, that the first session is used to collect the first information for the first network element, and the access and mobility management network element allocates second identification information to the terminal device.

In another possible example scenario, in a roaming scenario of the terminal device, the terminal device roams from a first network to a second network. The first identification information is identification information that is allocated by a network side of the first network to the terminal device and that is used to report the first information to the first network element. If the second network cannot identify the first identification information, an access and mobility management network element in the second network allocates, to the terminal device, identification information applicable in the second network as the second identification information.

D6: The session management network element sends a third message to the user plane network element, where the third message is used to request to create the first session, and the third message includes the second identification information.

In step D6, the session management network element sends the third message to the user plane network element in response to the second message, where the third message is used to request to create or modify the first session, and the third message includes the second identification information. For example, the third message is an "N4 Session Establishment Request" message.

D7: The session management network element determines a data forwarding policy of the first session.

In step D7, in a possible implementation, the session management network element determines the data forwarding policy of the first session in response to the second identification information included in the second message. The data forwarding policy of the first session includes: The user plane network element forwards data of the first session to the first network element, or the user plane network element locally stores (or locally caches) data of the first session.

The session management network element may determine, according to the data forwarding policy of the first session, a data forwarding policy of the first information carried in the first session. Specifically, when the data forwarding policy of the first session includes: The user plane network element locally stores the data of the first session, it is determined, according to the data forwarding policy of the first session, that the data forwarding policy of the first information is that the user plane network element locally stores the first information. The user plane network element sends the first information to the first network element in response to the first request of the first network element. Alternatively, when the data forwarding policy of the first session includes: The user plane network element forwards the data of the first session to the first network element, it is determined, according to the data forwarding policy of the first session, that the data forwarding policy of the first information is that the user plane network element forwards the first information to the first network element. After the user plane network element receives the first information sent by the terminal device via the first session, the user plane network element sends the first information to the first network element, that is, the user plane network element does not locally store the first information.

In another possible implementation, the data forwarding policy of the first session includes seventh indication information, and the user plane network element detects, according to the data forwarding policy of the first session, whether data carried in a session includes the seventh indication information. When the data transmitted in the session includes the seventh indication information, it is considered that the session is the first session, and the session is applicable to the data forwarding policy of the first session. Further, the data carried in the session is processed according to the data forwarding policy of the first session or the data forwarding policy of the first information. Optionally, the data forwarding policy of the first session includes the seventh indication information. The data forwarding policy of the first session may be configured by the session management network element for the user plane network element. After the session management network element configures the data forwarding policy of the first session for the user plane network element, the user plane network element locally stores the first information or forwards the first information to the first network element according to the data forwarding policy of the first session after receiving the first information that carries the first indication information. Alternatively, the data forwarding policy of the first session may be preconfigured in the user plane network element, and does not need to be configured by the session management network element. The user plane network element locally stores the first information or forwards the first information to the first network element according to the data forwarding policy of the first session after receiving the first information that carries the first indication information.

Optionally, the session management network element may directly determine the data forwarding policy of the first information. The data forwarding policy of the first information includes: The user plane network element forwards the first information to the first network element, or the user plane network element locally stores (or locally caches) the first information.

D8: The session management network element sends the data forwarding policy of the first session to the user plane network element.

In step D8, after the session management network element determines the data forwarding policy of the first session, the session management network element sends the data forwarding policy of the first session (or the data forwarding policy of the first information) to the user plane network element in response to the third message. For example, the session management network element sends an N4 session establishment request to the user plane network element, where the N4 session establishment request includes the data forwarding policy of the first session (or the data forwarding policy of the first information).

In a possible implementation, the session management network element sends the data forwarding policy of the first session and the second identification information to the user plane network element, and determines, with reference to the second identification information, that the first session is related to the second identification information.

Optionally, the session management network element may further send identification information of the first session to the user plane network element, so that the user plane network element determines the first session based on the identification information of the first session, and further determines the data forwarding policy of the first session with reference to the seventh indication information.

It may be understood that step D7 and step D8 may be performed after step D6. In other words, after the session management network element sends the third message to the user plane network element and creates or modifies the first session, the session management network element configures the data forwarding policy of the first session for the user plane network element. Alternatively, steps D7 and D8 may be performed in combination with step D6. In other words, after determining the data forwarding policy of the first session, the session management network element configures the data forwarding policy of the first session for the user plane network element by using the third message. The user plane network element determines the data forwarding policy of the first session in a procedure of creating or modifying the first session.

D9: The first network element sends a sixth message to the session management network element, where the sixth message is used to request the first information of the terminal device.

In step D9, the first network element determines, in step D3, the session management network element (the session management network element indicated by the second identifier set) corresponding to the terminal device that supports reporting of the first information. Then, the first network element sends the sixth message to the session management network element, where the sixth message is used to request the first information of the terminal device. The sixth message may include the first identification information.

For example, the sixth message is an "Nsmf_EventExposure_Subscribe/notify" message. An "Event ID" field in the sixth message is set to the first identification information.

D10: In response to the sixth message, the session management network element sends, to the first network element, an identifier of the user plane network element corresponding to the terminal device that supports reporting of the first information.

In step D10, the session management function finds, based on the first identification information carried in the sixth message, the terminal device corresponding to the first identification information, and the terminal device supports reporting of the first information to the first network element. In response to the sixth message, the session management function sends, to the first network element, the identifier of the user plane network element corresponding to the terminal device that supports reporting of the first information.

D11: The first network element sends a fifth message to the user plane network element, where the fifth message is used to request the first information of the terminal device.

In step D11, the first network element determines, in step D10, the user plane network element corresponding to the terminal device that supports reporting of the first information. Then, the first network element sends the fifth message to the user plane network element, where the fifth message is used to request the first information of the terminal device. The fifth message includes the first identification information, so that the user plane network element determines the first information related to the first identification information, and then forwards the first information to the user plane network element.

Optionally, the fifth message further includes the identification information of the first network element, so that the user plane network element forwards the first information to the first network element based on the identification information of the first network element after receiving the first information sent by the terminal device via the first session.

Optionally, the fifth message further includes the identification information of the terminal device, so that the user plane network element forwards, based on the identification information of the terminal device, the first information related to the terminal device to the first network element.

For example, the fifth message is an "Nupf_EventExposure_Subscribe/notify" message. An "Event ID" field in the fifth message is set to the first identification information.

After step D11, step D13 is performed.

D12: The terminal device receives the third indication information, where the third indication information is used to request to report the first information.

In step D12, the network side sends the third indication information to the terminal device, where the third indication information is used to request the terminal device to report the first information.

Optionally, the network side sends the fourth indication information to the terminal device, where the fourth indication information indicates the information type of the first information that the terminal device is requested to report.

In a possible implementation, the access and mobility management network element sends the third indication information and/or the fourth indication information to the terminal device. For example, the access and mobility management network element sends the third indication information and/or the fourth indication information to the terminal device in response to the fourth message.

For example, the third indication information and/or the fourth indication information are/is carried in an "N2 message" message.

In a possible implementation, step D12 is performed after step D3.

For example, step D12 is performed after step D3. In response to step D12, the terminal device performs step D4, that is, the terminal device creates or modifies the first session based on the third indication information and/or the fourth indication information. Specifically, the terminal device sends the first message to the access and mobility management network element in response to the third indication information and/or the fourth indication information, where the first message is used to request to create or modify the first session. Then, the terminal device sends the first information in the created first session, that is, performs step D13.

For another example, after the terminal device creates the first session, the terminal device receives the third indication information and/or the fourth indication information. The terminal device sends the first information in the created first session in response to the third indication information and/or the fourth indication information, that is, performs step D13. For example, the first session is created after step D8. When the first network element needs the first information, step D12 is performed. The first network element sends the third indication information and/or the fourth indication information to the terminal device via the access and mobility management network element.

D13: The terminal device sends the first information via the first session.

Step D13 is similar to step S1-2 or step S2, and details are not described herein again.

D14: The user plane network element sends the first information to the first network element.

In step D14, after receiving the first information sent by the terminal device via the first session, the user plane network element determines a processing manner of the first information according to the data forwarding policy of the first session.

For example, the data forwarding policy of the first session includes: The user plane network element locally stores the data of the first session. The data forwarding policy of the first information is that the user plane network element locally stores the first information. The user plane network element sends the first information to the first network element in response to the first request (the fifth message) of the first network element.

For another example, the data forwarding policy of the first session includes: The user plane network element forwards the data of the first session to the first network element. The data forwarding policy of the first information is that the user plane network element forwards the first information to the first network element. After the user plane network element receives the first information sent by the terminal device via the first session, the user plane network element sends the first information to the first network element, that is, the user plane network element does not locally store the first information.

D15: The terminal device receives fifth indication information, where the fifth indication information is used to request to stop reporting the first information.

In step D15, the network side sends the fifth indication information to the terminal device, where the fifth indication information is used to request the terminal device to stop reporting the first information.

Optionally, the network side sends sixth indication information to the terminal device, where the sixth indication information indicates an information type of the first information that the terminal device is requested to stop reporting. For example, after receiving the sixth indication information, the terminal device stops reporting partial first information indicated by the sixth indication information, and the terminal device still reports remaining first information.

In a possible implementation, the access and mobility management network element sends the fifth indication information and/or the sixth indication information to the terminal device. For example, the access and mobility management network element sends the fifth indication information and/or the sixth indication information to the terminal device in response to the fourth message.

For example, the fifth indication information and/or the sixth indication information are/is carried in an "N2 message" message.

Optionally, in step D15, after the terminal device stops, based on the fifth indication information, reporting the first information, the terminal device may release the first session.

Optionally, the network side sends the fifth indication information to the terminal device in response to a subscription cancellation request sent by the first network element.

In this embodiment of this application, the terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of a core network, and improve network security. In addition, the first session is used to collect the first information, and the first session is a data collection session. Compared with reporting measurement information via signaling, in this application, the measurement information is reported via a user plane, so that signaling overheads can be effectively reduced, an amount of transmission data in the measurement information of the terminal device can be increased, and a network throughput can be improved. The first network element may subscribe to the first information of the terminal device from a network element in the core network by using a plurality of first requests, to improve implementation flexibility of the solution. Based on an indication of the network side, the terminal device may start reporting the first information or stop reporting the first information, to flexibly adapt to various service requirements and save communication resources.

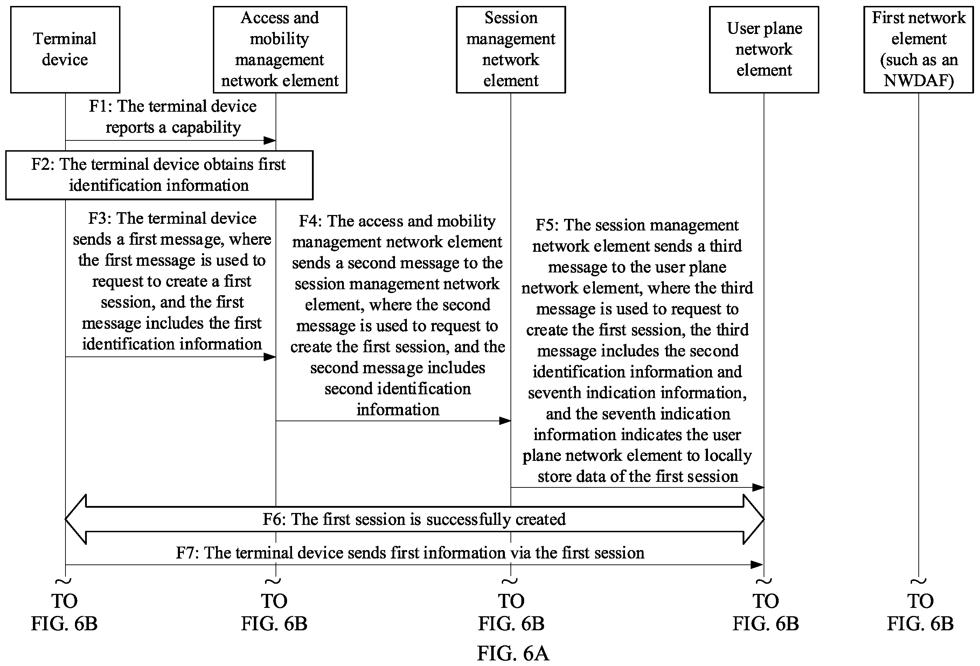

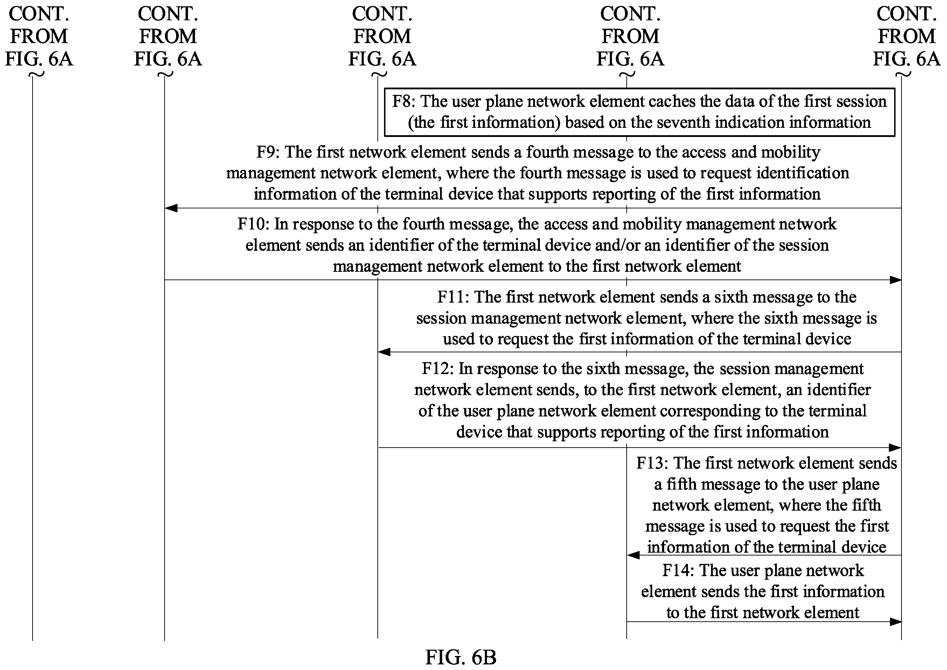

With reference to the foregoing embodiments, the following describes an example provided in embodiments of this application. FIG. 6A and FIG. 6B are another schematic flowchart of an embodiment of a communication method according to an embodiment of this application. The communication method provided in this embodiment of this application includes the following steps.

F1: A terminal device reports a capability.

F2: The terminal device obtains first identification information.

F3: The terminal device sends a first message, where the first message is used to request to create a first session, and the first message includes the first identification information.

Step F1 to step F3 are similar to step D1 to step D3, and details are not described herein again.

F4: An access and mobility management network element sends a second message to a session management network element, where the second message is used to request to create the first session, and the second message includes second identification information.

F5: The session management network element sends a third message to a user plane network element, where the third message is used to request to create the first session, the third message includes the second identification information and seventh indication information, and the seventh indication information indicates the user plane network element to locally store (or locally cache) data of the first session.

Step F4 and step F5 are similar to step D5 and step D6, and details are not described herein again.

F6: The first session is successfully created.

In step F6, the first session is established between the terminal device and the user plane network element by using the foregoing method.

F7: The terminal device sends first information via the first session.

Step F7 is similar to step D13, and details are not described herein again.

F8. The user plane network element caches the data of the first session (the first information) according to a data forwarding policy of the first session.

In step F8, after receiving the first information sent by the terminal device via the first session, the user plane network element determines, according to the data forwarding policy of the first session, that the data of the first session, that is, the first information, needs to be locally cached.

Step F9 is performed after step F8.

F9: A first network element sends a fourth message to the access and mobility management network element, where the fourth message is used to request identification information of the terminal device that supports reporting of the first information.

In step F9, when the first network element needs the first information, the first network element sends the fourth message to the access and mobility management network element. For details, refer to step D3. Details are not described herein again.

F10: In response to the fourth message, the access and mobility management network element sends an identifier of the terminal device and/or an identifier of the session management network element to the first network element.

Step F10 is similar to step D3, and details are not described herein again.

F11: The first network element sends a sixth message to the session management network element, where the sixth message is used to request the first information of the terminal device.

F12: In response to the sixth message, the session management network element sends, to the first network element, an identifier of the user plane network element corresponding to the terminal device that supports reporting of the first information.

Step F11 and step F12 are similar to step D9 and step D10, and details are not described herein again.

F13: The first network element sends a fifth message to the user plane network element, where the fifth message is used to request the first information of the terminal device.

Step F13 is similar to step D11, and details are not described herein again.

F14: The user plane network element sends the first information to the first network element.

Step F14 is similar to step D13, and details are not described herein again.

In this embodiment of this application, after the terminal device creates the first session with the user plane network element, the terminal device reports the first information to the user plane network element via the first session. The user plane network element reports the first information to the first network element in response to a first request of the first network element. The first network element collects the first information of the terminal device via the first session (for example, a PDU session) established on a user plane. It can be ensured that when performing air interface model training, a core network device (that is, a network element in a core network) collects sufficient measurement data of the terminal device without increasing air interface signaling overheads of the terminal device, so that the first network element completes air interface AI model training and inference, and air interface AI model training and inference are not implemented on a base station side, to provide better air interface resources for the terminal device.

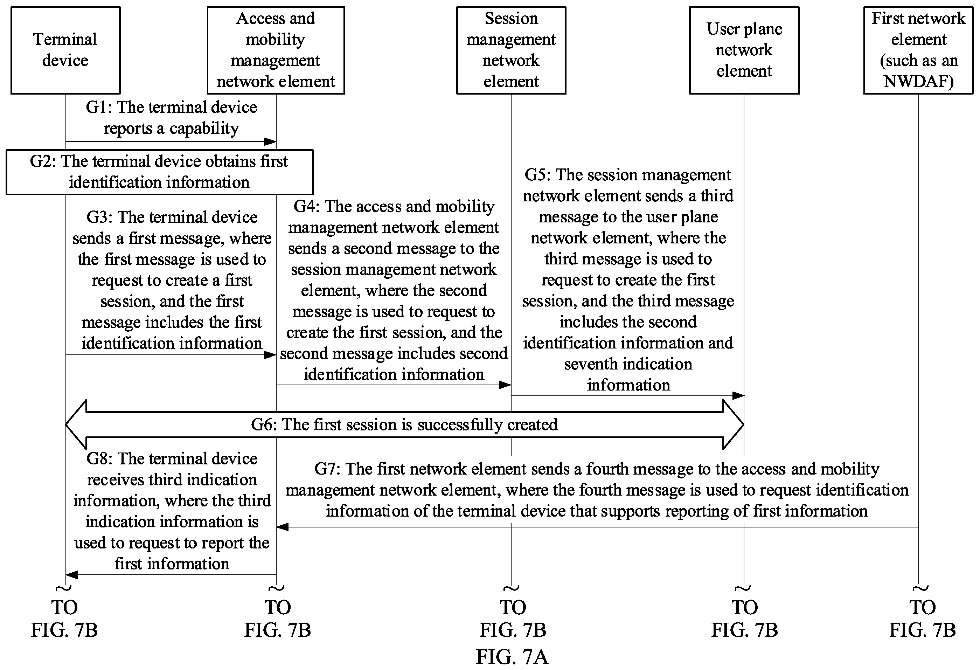

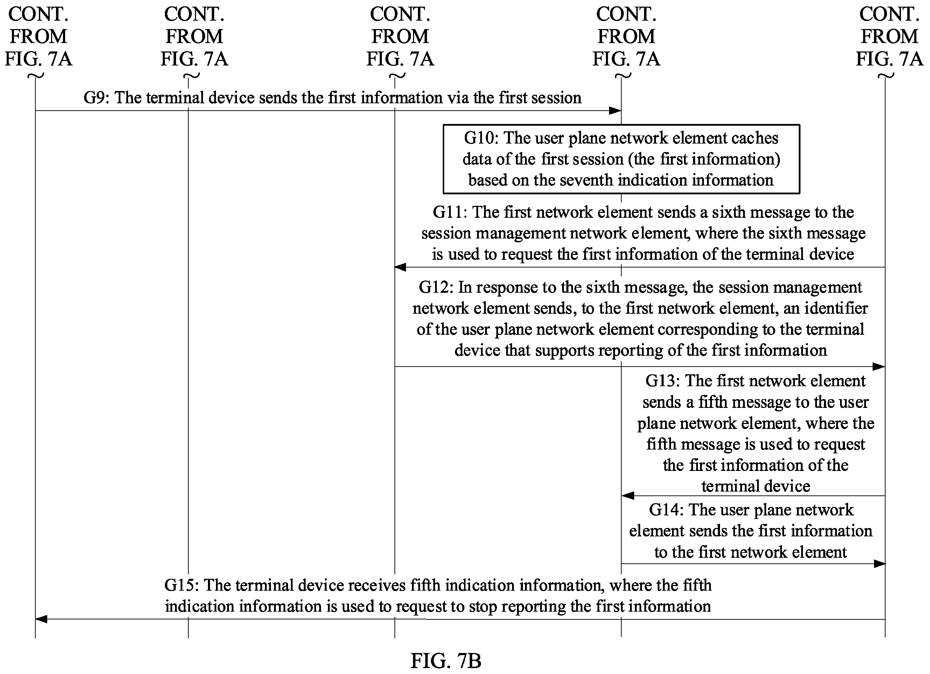

With reference to the foregoing embodiments, the following describes another example provided in embodiments of this application. FIG. 7A and FIG. 7B are another schematic flowchart of an embodiment of a communication method according to an embodiment of this application. The communication method provided in this embodiment of this application includes the following steps.

G1: A terminal device reports a capability.

G2: The terminal device obtains first identification information.

G3: The terminal device sends a first message, where the first message is used to request to create a first session, and the first message includes the first identification information.

G4: An access and mobility management network element sends a second message to a session management network element, where the second message is used to request to create the first session, and the second message includes second identification information.

G5: The session management network element sends a third message to a user plane network element, where the third message is used to request to create the first session, and the third message includes the second identification information and seventh indication information.

Step G1 to step G5 are consistent with step F1 to step F5, and details are not described herein again.

G6: The first session is successfully created.

G7: A first network element sends a fourth message to the access and mobility management network element, where the fourth message is used to request identification information of the terminal device that supports reporting of first information.

Step G7 is similar to step D3, and details are not described herein again.

G8: The terminal device receives third indication information, where the third indication information is used to request to report the first information.

In step G8, in response to the fourth message, the access and mobility management network element determines the terminal device that needs to report the first information, and then the access and mobility management network element sends the third indication information to the terminal device, so that the terminal device reports the first information based on the third indication information. Step G8 is similar to step D12, and details are not described herein again.

G9: The terminal device sends the first information via the first session.

Step G9 is similar to step D13, and details are not described herein again.

G10: The user plane network element caches data of the first session (the first information) based on the seventh indication information.

Step G10 is similar to step F8, and details are not described herein again.

G11: The first network element sends a sixth message to the session management network element, where the sixth message is used to request the first information of the terminal device.

G12: In response to the sixth message, the session management network element sends, to the first network element, an identifier of the user plane network element corresponding to the terminal device that supports reporting of the first information.

G13: The first network element sends a fifth message to the user plane network element, where the fifth message is used to request the first information of the terminal device.

G14: The user plane network element sends the first information to the first network element.

Step G11 to step G14 are similar to step D9 to step D11 and step D14, and details are not described herein again.

G15: The terminal device receives fifth indication information, where the fifth indication information is used to request to stop reporting the first information.

Step G15 is similar to step D15, and details are not described herein again.

In this embodiment of this application, the terminal device reports the first information in the created first session based on an indication of the access and mobility management network element, to adapt to a service requirement of the first network element, reduce occupation of communication resources, and improve a network throughput.

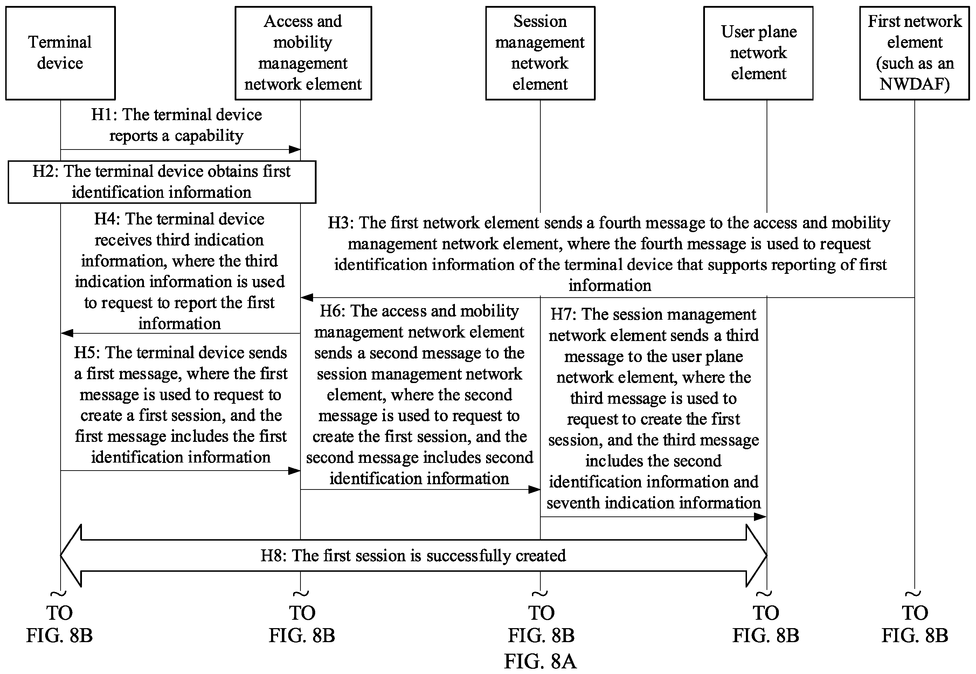

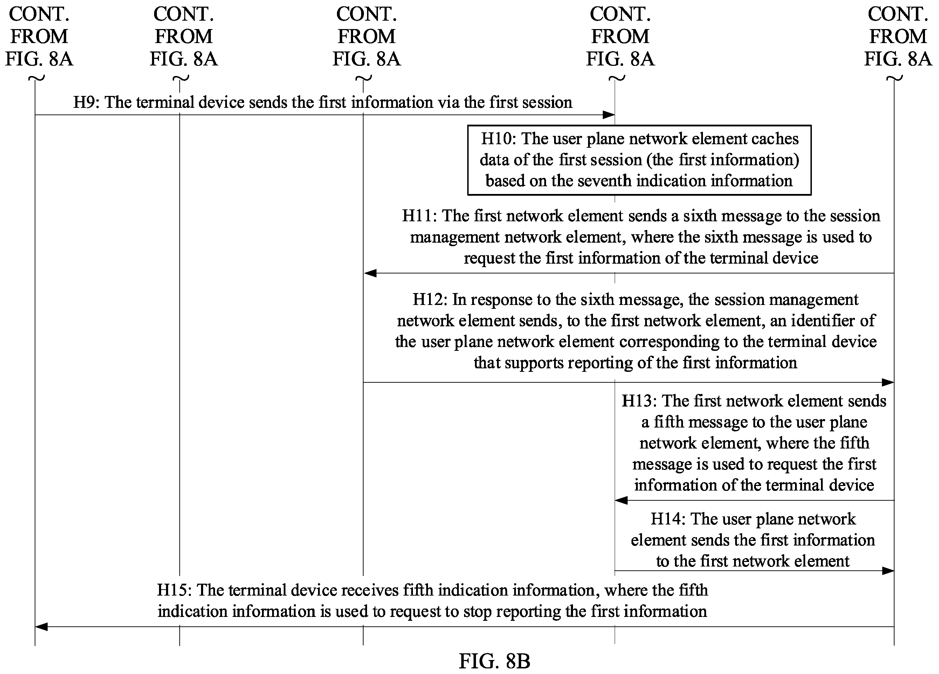

With reference to the foregoing embodiments, the following describes another example provided in embodiments of this application. FIG. 8A and FIG. 8B are another schematic flowchart of an embodiment of a communication method according to an embodiment of this application. The communication method provided in this embodiment of this application includes the following steps.

H1: A terminal device reports a capability.

H2: The terminal device obtains first identification information.

H3: A first network element sends a fourth message to an access and mobility management network element, where the fourth message is used to request identification information of the terminal device that supports reporting of first information. Step H4 is performed after step H3.

Step H1 to step H3 are similar to step D1 to step D3, and details are not described herein again.

H4: The terminal device receives third indication information, where the third indication information is used to request to report the first information.

Step H5 is performed after step H4.

Specifically, in step H4, after receiving the fourth message, the access and mobility management network element sends the third indication information to the terminal device, where the third indication information is used to request the terminal device to report the first information. Because a first session that may be used to transmit the first information has not been created between the terminal device and a user plane network element, the terminal device creates the first session based on the third indication information.

Optionally, the third indication information further indicates the terminal device to create the first session used to report the first information. The terminal device creates the first session based on the third indication information.

Step H4 is similar to step D12, and details are not described herein again.

H5: The terminal device sends a first message, where the first message is used to request to create the first session, and the first message includes the first identification information.

H6: The access and mobility management network element sends a second message to a session management network element, where the second message is used to request to create the first session, and the second message includes second identification information.

H7: The session management network element sends a third message to the user plane network element, where the third message is used to request to create the first session, and the third message includes the second identification information and seventh indication information.

Step H5 to step H7 are similar to step D4 to step D6, and details are not described herein again.

H8: The first session is successfully created.

H9: The terminal device sends the first information via the first session.

H10: The user plane network element caches data of the first session (the first information) based on the seventh indication information.

Step H8 to step H10 are similar to step F6 to step F8, and details are not described herein again.

H11: The first network element sends a sixth message to the session management network element, where the sixth message is used to request the first information of the terminal device.

H12: In response to the sixth message, the session management network element sends, to the first network element, an identifier of the user plane network element corresponding to the terminal device that supports reporting of the first information.

H13: The first network element sends a fifth message to the user plane network element, where the fifth message is used to request the first information of the terminal device.

H14: The user plane network element sends the first information to the first network element.

Step H11 to step H14 are similar to step F11 to step F14, and details are not described herein again.

H15: The terminal device receives fifth indication information, where the fifth indication information is used to request to stop reporting the first information.

Step H15 is similar to step D15, and details are not described herein again.

In this embodiment of this application, the terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of a core network, and improve network security. In addition, the first session is used to collect the first information, and the first session is a data collection session. Compared with reporting measurement information via signaling, in this application, the measurement information is reported via a user plane, so that signaling overheads can be effectively reduced, an amount of transmission data in the measurement information of the terminal device can be increased, and a network throughput can be improved. The first network element may subscribe to the first information of the terminal device from a network element in the core network by using a plurality of first requests, to improve implementation flexibility of the solution. Based on an indication of a network side, the terminal device may start reporting the first information or stop reporting the first information, to flexibly adapt to various service requirements and save communication resources.

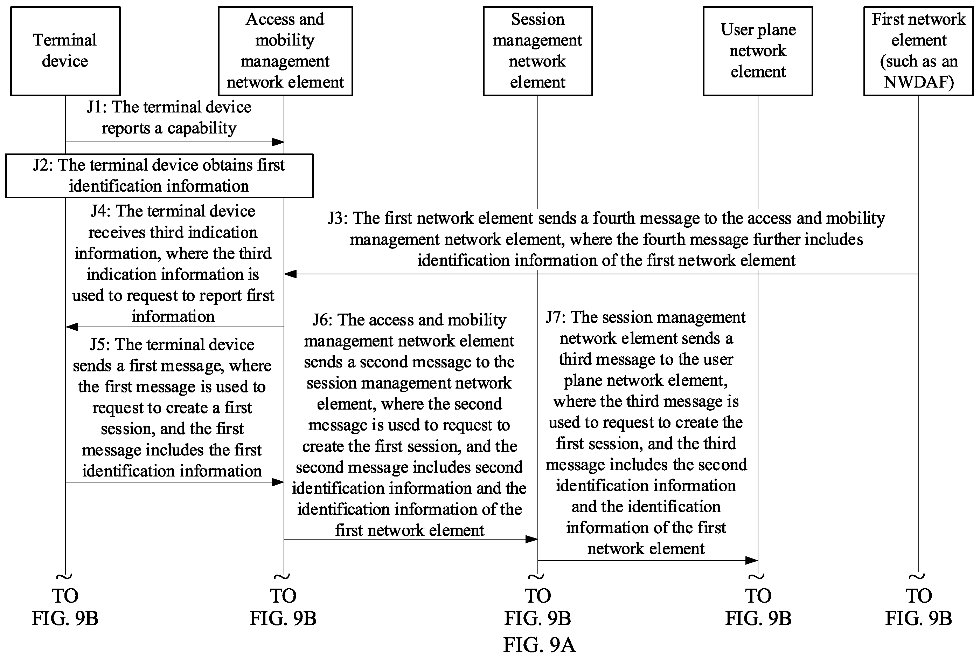

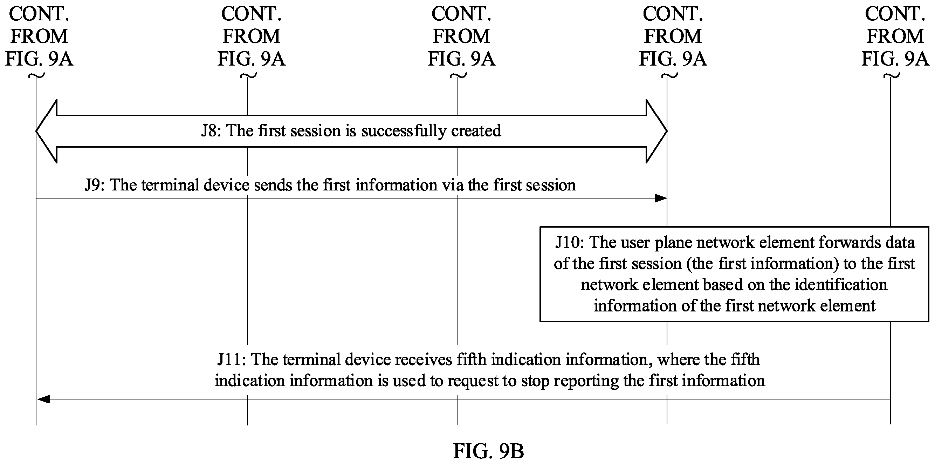

With reference to the foregoing embodiments, the following describes another example provided in embodiments of this application. FIG. 9A and FIG. 9B are another schematic flowchart of an embodiment of a communication method according to an embodiment of this application. The communication method provided in this embodiment of this application includes the following steps.

J1: A terminal device reports a capability.

J2: The terminal device obtains first identification information.

J3: A first network element sends a fourth message to an access and mobility management network element, where the fourth message is used to request identification information of the terminal device that supports reporting of first information, and the fourth message further includes identification information of the first network element.

J4: The terminal device receives third indication information, where the third indication information is used to request to report the first information.

J5: The terminal device sends a first message, where the first message is used to request to create a first session, and the first message includes the first identification information.

J6: The access and mobility management network element sends a second message to a session management network element, where the second message is used to request to create the first session, and the second message includes second identification information and the identification information of the first network element.

J7: The session management network element sends a third message to a user plane network element, where the third message is used to request to create the first session, and the third message includes the second identification information and the identification information of the first network element.

In step J7, the session management network element obtains the identification information of the first network element from the access and mobility management network element, and then the session management network element forwards the identification information of the first network element to the user plane network element, so that the user plane network element may send the first information to the first network element based on the identification information of the first network element after receiving the first information reported by the terminal device.

J8: The first session is successfully created.

Step J1 to step J8 are similar to step H1 to step H8, and details are not described herein again.

J9: The terminal device sends the first information via the first session.

J10: The user plane network element forwards data of the first session (the first information) to the first network element based on the identification information of the first network element.

Step J9 and step J10 are similar to step D13 and step D14, and details are not described herein again.

J11: The terminal device receives fifth indication information, where the fifth indication information is used to request to stop reporting the first information.

Step J11 is similar to step D15, and details are not described herein again.

In this embodiment of this application, the first network element does not need to send a first request to the user plane network element or the session management network element. After receiving the first information, the user plane network element directly forwards the first information to the first network element, to save communication resources.

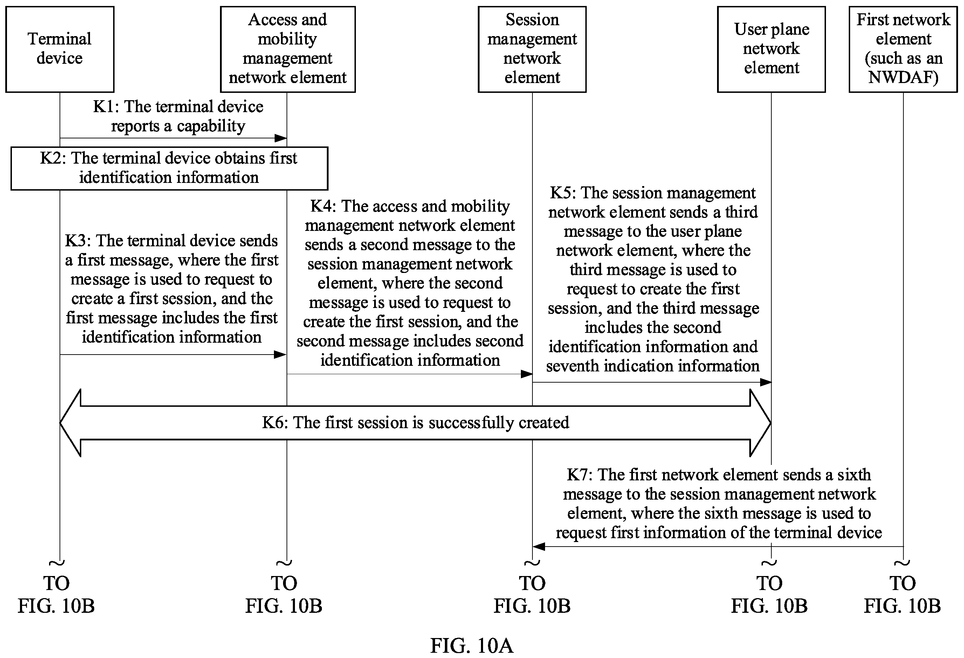

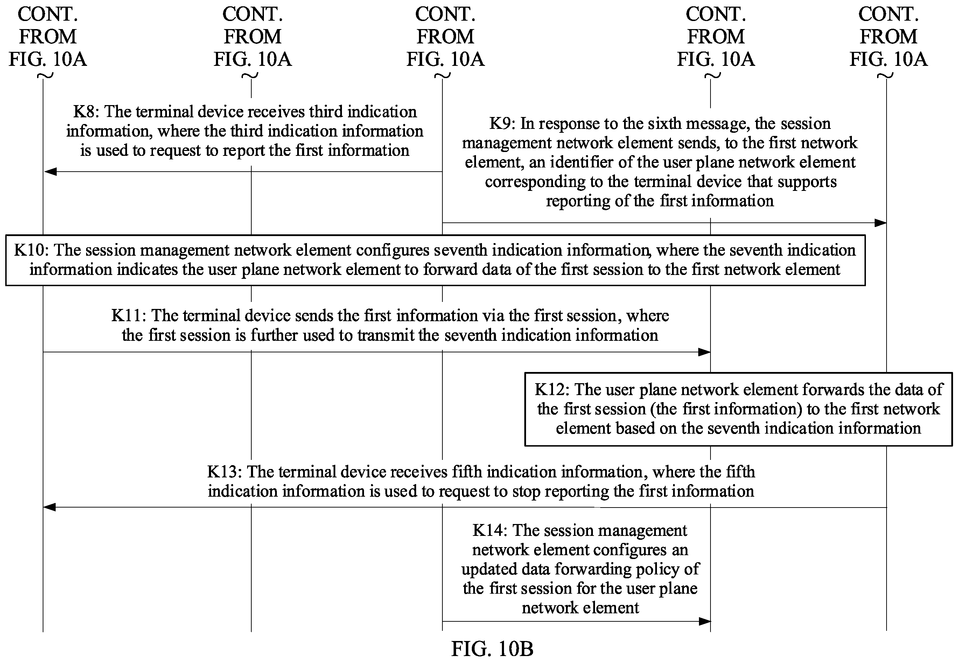

With reference to the foregoing embodiments, the following describes another example provided in embodiments of this application. FIG. 10A and FIG. 10B are another schematic flowchart of an embodiment of a communication method according to an embodiment of this application. The communication method provided in this embodiment of this application includes the following steps.

K1: A terminal device reports a capability.

K2: The terminal device obtains first identification information.

K3: The terminal device sends a first message, where the first message is used to request to create a first session, and the first message includes the first identification information.

K4: An access and mobility management network element sends a second message to a session management network element, where the second message is used to request to create the first session, and the second message includes second identification information.

K5: The session management network element sends a third message to a user plane network element, where the third message is used to request to create the first session, and the third message includes the second identification information and seventh indication information.

K6: The first session is successfully created.

Step K1 to step K6 are similar to step G1 to step G6, and details are not described herein again.

K7: A first network element sends a sixth message to the session management network element, where the sixth message is used to request first information of the terminal device.

Step K7 is similar to step G11. In step K7, the first network element sends the sixth message to the session management network element. The session management network element sends third indication information to the terminal device via the access and mobility management network element in response to the sixth message.

K8: The terminal device receives the third indication information, where the third indication information is used to request to report the first information.

Step K8 is similar to step D12, and details are not described herein again.

K9: In response to the sixth message, the session management network element sends, to the first network element, an identifier of the user plane network element corresponding to the terminal device that supports reporting of the first information.

Step K9 is similar to step G12, and details are not described herein again.

K10: The session management network element configures the seventh indication information, where the seventh indication information indicates the user plane network element to forward data of the first session to the first network element.

In step K10, the session management network element configures a data forwarding policy of the first session for the terminal device via the access and mobility management network element, where the data forwarding policy of the first session is that the user plane network element forwards the data of the first session to the first network element. In a possible implementation, the session management network element sends the seventh indication information to the terminal device, where the seventh indication information indicates the user plane network element to forward the data of the first session to the first network element.

The session management network element configures the data forwarding policy of the first session for the user plane network element, where the data forwarding policy of the first session is that the user plane network element forwards the data of the first session to the first network element. In a possible implementation, the session management network element sends the seventh indication information to the user plane network element.

K11: The terminal device sends the first information via the first session, where the first session is further used to transmit the seventh indication information.

In step K11, when the terminal device sends the first information via the first session, the terminal device further sends the seventh indication information via the first session. The seventh indication information indicates the user plane network element to forward the data of the first session to the first network element.

K12: The user plane network element forwards the data of the first session (the first information) to the first network element based on the seventh indication information.

K13: The terminal device receives fifth indication information, where the fifth indication information is used to request to stop reporting the first information.

Step K13 is similar to step J11, and details are not described herein again.

K14: The session management network element configures an updated data forwarding policy of the first session for the user plane network element.

In step K14, after the terminal device stops reporting the first information, the terminal device may send other information to the user plane network element via the first session. In this case, the user plane network element may not need to forward the data of the first session to the first network element. Therefore, the session management network element configures the updated data forwarding policy of the first session for the user plane network element, where the updated data forwarding policy of the first session indicates that the data of the first session is normally processed.

In this embodiment of this application, the terminal device can send the first information to the first network element without obtaining address information of the first network element, so that the first network element (for example, a data analytics network element or a model training network element) performs processing such as data analysis, model training, or model inference based on the first information, to effectively ensure security and privacy of a core network device, help hide an internal network element topology of a core network, and improve network security. In addition, the first session is used to collect the first information, and the first session is a data collection session. Compared with reporting measurement information via signaling, in this application, the measurement information is reported via a user plane, so that signaling overheads can be effectively reduced, an amount of transmission data in the measurement information of the terminal device can be increased, and a network throughput can be improved. The first network element may subscribe to the first information of the terminal device from a network element in the core network by using a plurality of first requests, to improve implementation flexibility of the solution. Based on an indication of a network side, the terminal device may start reporting the first information or stop reporting the first information, to flexibly adapt to various service requirements and save communication resources.

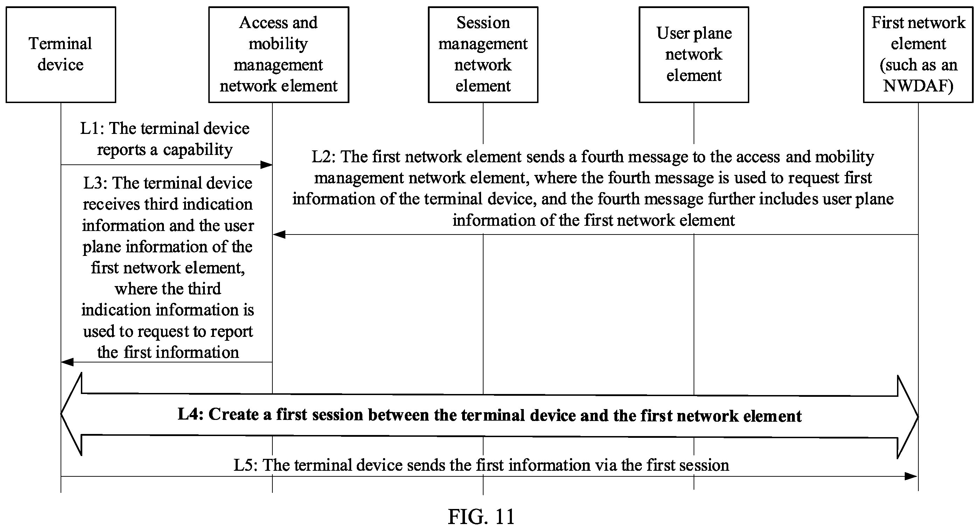

With reference to the foregoing embodiments, the following describes another example provided in embodiments of this application. FIG. 11 is another schematic flowchart of an embodiment of a communication method according to an embodiment of this application. The communication method provided in this embodiment of this application includes the following steps.

L1: A terminal device reports a capability.

Step L1 is similar to step D1, and details are not described herein again.

L2: A first network element sends a fourth message to an access and mobility management network element, where the fourth message is used to request identification information of the terminal device that supports reporting of first information, and the fourth message further includes user plane information of the first network element.

Step L2 is similar to step D3. The fourth message further includes the user plane information of the first network element, and the user plane information includes but is not limited to address information, port information, or the like.

L3: The terminal device receives third indication information and the user plane information of the first network element, where the third indication information is used to request to report the first information.

In step L3, after receiving the fourth message, the access and mobility management network element sends the third indication information (or fourth indication information) to the terminal device, where the third indication information is used to request to report the first information. The access and mobility management network element is further configured to send the user plane information of the first network element to the terminal device, so that the terminal device establishes a first session with the first network element based on the user plane information.

L4: Create the first session between the terminal device and the first network element.

L5: The terminal device sends the first information via the first session.

In this embodiment of this application, after obtaining the user plane information of the first network element, the terminal device establishes the first session with the first network element. The first session is used to collect the first information, and the first session is a data collection session. Compared with reporting measurement information via signaling, in this application, the measurement information is reported via a user plane, so that signaling overheads can be effectively reduced, an amount of transmission data in the measurement information of the terminal device can be increased, and a network throughput can be improved.

The foregoing describes this application from the perspective of the method, and the following further describes other embodiments provided in this application.

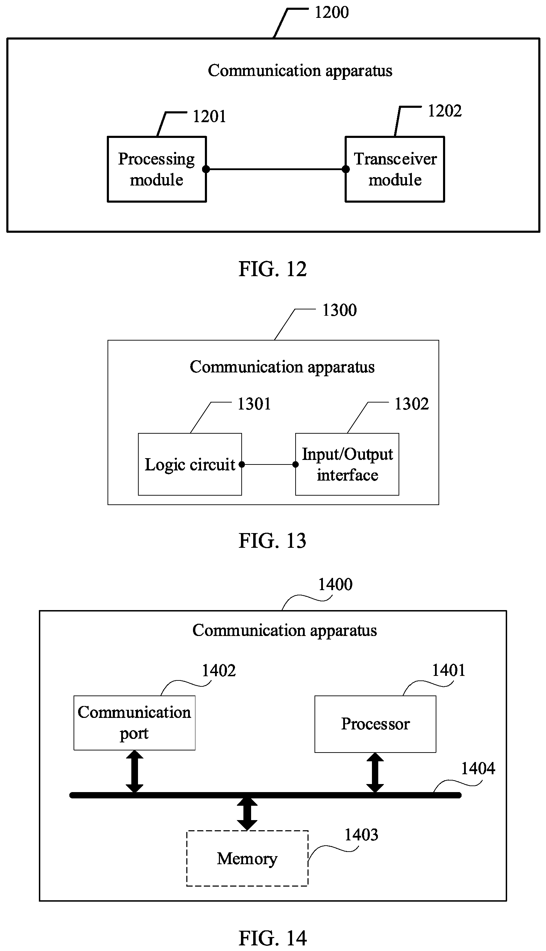

FIG. 12 is a diagram of an implementation of a communication apparatus according to this application. The communication apparatus 1200 includes a processing module 1201 and a transceiver module 1202. The communication apparatus 1200 may implement functions of the communication apparatus (including the terminal device, the access and mobility management network element, the session management network element, the user plane network element, the first network element, and/or the like) in the foregoing method embodiments, and therefore can also implement beneficial effects of the foregoing method embodiments. In this embodiment of this application, the communication apparatus 1200 may be the terminal device, the access and mobility management network element, the session management network element, the user plane network element, and/or the first network element; or may be an integrated circuit, an element, or the like inside the terminal device, the access and mobility management network element, the session management network element, the user plane network element, and/or the first network element, for example, a chip; or may be integrated with an integrated circuit or an element inside the terminal device, the access and mobility management network element, the session management network element, the user plane network element, and/or the first network element.

FIG. 13 is another diagram of a structure of a communication apparatus 1300 according to this application. The communication apparatus 1300 includes at least an input/output interface 1302. The communication apparatus 1300 may be a chip or an integrated circuit.

Optionally, the communication apparatus further includes a logic circuit 1301.

The transceiver module 1202 shown in FIG. 12 may be a communication interface. The communication interface may be the input/output interface 1302 in FIG. 13, and the input/output interface 1302 may include an input interface and an output interface. Alternatively, the communication interface may be a transceiver circuit, and the transceiver circuit may include an input interface circuit and an output interface circuit.

Optionally, when the communication apparatus 1300 is the terminal device, the access and mobility management network element, the session management network element, the user plane network element, and/or the first network element in the foregoing embodiments, the input/output interface 1302 is configured to input/output information; and the logic circuit 1301 is configured to perform the method performed by the terminal device, the access and mobility management network element, the session management network element, the user plane network element, and/or the first network element in the foregoing embodiments.

The logic circuit 1301 and the input/output interface 1302 may further perform other steps performed by the communication apparatus in any embodiment and implement corresponding beneficial effects. Details are not described herein again.

In a possible implementation, the processing module 1201 shown in FIG. 12 may be the logic circuit 1301 in FIG. 13.

Optionally, the logic circuit 1301 may be a processing apparatus, and a part of or all of functions of the processing apparatus may be implemented by software. The part or all of the functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may only include the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processor units (central processor unit, CPU), network processors (network processor, NP), digital signal processing circuits (digital signal processor, DSP), micro controller units (micro controller unit, MCU), programmable controllers (programmable logic device, PLD), another integrated chip, any combination of the foregoing chips or processors, or the like.

FIG. 14 shows a communication apparatus 1400 in the foregoing embodiments according to an embodiment of this application. The communication apparatus 1400 may be specifically a communication apparatus serving as a terminal device, an access and mobility management network element, a session management network element, a user plane network element, and/or a first network element in the foregoing embodiments.

In a possible diagram of a logical structure of the communication apparatus 1400, the communication apparatus 1400 may include but is not limited to at least one processor 1401 and a communication port 1402.

Further optionally, the apparatus may include at least one of a memory 1403 and a bus 1404. In this embodiment of this application, the at least one processor 1401 is configured to control an action of the communication apparatus 1400.

In addition, the processor 1401 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1400 shown in FIG. 14 may be specifically configured to implement steps implemented by the terminal device, the access and mobility management network element, the session management network element, the user plane network element, and/or the first network element in the foregoing method embodiments, and achieve technical effects corresponding to the terminal device, the access and mobility management network element, the session management network element, the user plane network element, and/or the first network element. For a specific implementation of the communication apparatus shown in FIG. 14, refer to the descriptions in the foregoing method embodiments. Details are not described herein again.

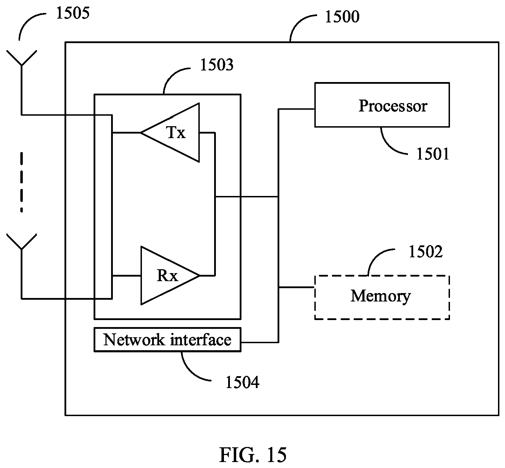

FIG. 15 is a diagram of a structure of a communication apparatus 1500 in the foregoing embodiments according to an embodiment of this application. The communication apparatus 1500 may be specifically a communication apparatus serving as a terminal device, an access and mobility management network element, a session management network element, a user plane network element, and/or a first network element in the foregoing embodiments. For a structure of the communication apparatus, refer to the structure shown in FIG. 15.

The communication apparatus 1500 includes at least one processor 1501 and at least one network interface 1504. Further optionally, the communication apparatus includes at least one memory 1502, at least one transceiver 1503, and one or more antennas 1505. The processor 1501, the memory 1502, the transceiver 1503, and the network interface 1504 are connected, for example, through a bus. In this embodiment of this application, the connection may include various interfaces, transmission lines, buses, or the like. This is not limited in this embodiment. The antenna 1505 is connected to the transceiver 1503. The network interface 1504 is configured to enable the communication apparatus to communicate with another communication device through a communication link. For example, the network interface 1504 may include a network interface between the communication apparatus and a core network device, for example, an S1 interface. The network interface may include a network interface between the communication apparatus and another communication apparatus (for example, another radio access network or core network device), for example, an X2 or Xn interface.

The processor 1501 is mainly configured to process a communication protocol and communication data; control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1501 in FIG. 15. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance a processing capability, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1502 may exist independently, and is connected to the processor 1501. Optionally, the memory 1502 may be integrated with the processor 1501, for example, integrated into one chip. The memory 1502 can store program code for executing the technical solution in embodiments of this application, and the processor 1501 controls execution of the program code. Various types of executed computer program code may also be considered as drivers of the processor 1501.

FIG. 15 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1503 may be configured to support receiving or sending of a radio frequency signal between the communication apparatus and a terminal, and the transceiver 1503 may be connected to the antenna 1505. The transceiver 1503 includes a transmitter Tx and a receiver Rx. Specifically, the one or more antennas 1505 may receive radio frequency signals. The receiver Rx of the transceiver 1503 is configured to receive the radio frequency signal from the antenna, convert the radio frequency signal into a digital baseband signal or a digital intermediate frequency signal, and provide the digital baseband signal or the digital intermediate frequency signal to the processor 1501, so that the processor 1501 performs further processing, for example, demodulation processing and decoding processing, on the digital baseband signal or the digital intermediate frequency signal. In addition, the transmitter Tx of the transceiver 1503 is further configured to receive a modulated digital baseband signal or a modulated digital intermediate frequency signal from the processor 1501, convert the modulated digital baseband signal or the modulated digital intermediate frequency signal into a radio frequency signal, and send the radio frequency signal through the one or more antennas 1505. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion is adjustable. The transmitter Tx may selectively perform one-level or multi-level up-conversion mixing and digital-to-analog conversion on the modulated digital baseband signal or the modulated digital intermediate frequency signal, to obtain the radio frequency signal. A sequence of the up-conversion mixing and the digital-to-analog conversion is adjustable. The digital baseband signal and the digital intermediate frequency signal may be collectively referred to as a digital signal.

The transceiver 1503 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. In other words, the transceiver module includes the receiving unit and the sending unit. The receiving unit may also be referred to as a receiver, an input port, a receive circuit, or the like. The sending unit may be referred to as a transmitter, a transmitter machine, a transmit circuit, or the like.

It should be noted that the communication apparatus 1500 shown in FIG. 15 may be specifically configured to implement steps implemented by the terminal device, the access and mobility management network element, the session management network element, the user plane network element, and/or the first network element in the foregoing method embodiments, and achieve technical effects corresponding to the terminal device, the access and mobility management network element, the session management network element, the user plane network element, and/or the first network element. For a specific implementation of the communication apparatus 1500 shown in FIG. 15, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device, the access and mobility management network element, the session management network element, the user plane network element, and/or the first network element in the foregoing embodiments.

An embodiment of this application further provides a computer program product (or referred to as a computer program) storing one or more computers. When the computer program product is executed by a processor, the processor performs the method in the possible implementations of the terminal device, the access and mobility management network element, the session management network element, the user plane network element, and/or the first network element.

An embodiment of this application further provides a chip system. The chip system includes at least one processor, configured to support a communication apparatus in implementing functions in the possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device, the access and mobility management network element, the session management network element, the user plane network element, and/or the first network element in the foregoing method embodiments.

An embodiment of this application further provides a communication system. The communication system includes the terminal device, the access and mobility management network element, the session management network element, the user plane network element, and/or the first network element in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division, and there may be another division manner during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing module, or each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or a part making contributions, or all or some of the technical solutions may be implemented in a form of software product. The computer software product is stored in a storage medium and includes several instructions for instructing a computer device (which may be a personal computer, a server, a radio access network, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, wherein the method is applied to a terminal device, and the method comprises:
sending a first message, wherein the first message is used to request to create a first session, the first message further comprises first identification information, the first identification information is used to identify the first session, the first identification information further indicates that the first session is used to collect first information, and the first information is used for model training or model inference; and
sending the first information via the first session, wherein the first information comprises measurement information of the terminal device.

2. The method according to claim 1, wherein the method further comprises:
sending first indication information, wherein the first indication information indicates that the terminal device supports reporting of the first information.

3. The method according to claim 1 or 2, wherein the method further comprises:
sending second indication information, wherein the second indication information indicates an information type of the first information supported to be reported by the terminal device.

4. The method according to any one of claims 1 to 3, wherein the method further comprises:
obtaining the first identification information from a local configuration; or
receiving the first identification information from an access and mobility management network element.

5. The method according to any one of claims 1 to 4, wherein sending the first information via the first session comprises:
receiving third indication information, wherein the third indication information is used to request to report the first information; and
sending the first information via the first session in response to the third indication information.

6. The method according to any one of claims 1 to 5, wherein the method further comprises:
receiving fourth indication information, wherein the fourth indication information indicates an information type of the first information requested to be reported; and
sending the first information via the first session in response to the fourth indication information, wherein an information type of the first information is the information type indicated by the fourth indication information.

7. The method according to any one of claims 1 to 6, wherein after sending the first information via the first session, the method further comprises:
receiving fifth indication information, wherein the fifth indication information is used to request the terminal device to stop sending the first information; and
in response to the fifth indication information, stopping sending the first information via the first session.

8. The method according to any one of claims 1 to 7, wherein the first identification information is a data network name DNN, single network slice selection assistance information S-NSSAI, or a session identifier.

9. The method according to any one of claims 1 to 8, wherein a destination of the first information is a first network element, and the first network element comprises a data collection coordination function or a network data analytics function.

10. A communication method, wherein the method is applied to an access and mobility management network element, and the method comprises:
receiving a fourth message from a first network element, wherein the fourth message is used to request identification information of a terminal device that supports reporting of first information, and the first information is used for model training or model inference; and
sending a first identifier set to the first network element in response to the fourth message, wherein the first identifier set comprises one or more pieces of identification information, and the identification information comprised in the first identifier set indicates the terminal device that supports reporting of the first information.

11. The method according to claim 10, wherein the method further comprises:
sending third indication information to the terminal device in response to the fourth message, wherein the third indication information is used to request to report the first information.

12. The method according to claim 10 or 11, wherein the method further comprises:
receiving a first message sent by the terminal device, wherein the first message is used to request to create a first session, the first message comprises first identification information, and the first identification information is used to identify the first session and identify that the first session is used to collect the first information; and
sending a second message to a session management network element, wherein the second message is used to request to create the first session, the second message comprises second identification information, the second identification information is determined based on the first identification information, and the second identification information is used to identify the first session and identify that the first session is used to collect the first information.

13. The method according to claim 11 or 12, wherein the method further comprises:
sending the first identification information to the terminal device.

14. The method according to any one of claims 11 to 13, wherein the fourth message comprises any one or more of the following information:
the identification information of the terminal device, the third indication information, or fourth indication information, wherein the third indication information is used to request to report the first information, and the fourth indication information indicates an information type of the first information requested to be reported.

15. The method according to any one of claims 11 to 14, wherein the method further comprises:
obtaining the first identification information from subscription information of the terminal device; or
obtaining the first identification information from a policy control function network element; or
obtaining the first identification information from the fourth message sent by the first network element, wherein the fourth message further carries the first identification information.

16. The method according to any one of claims 11 to 15, wherein the fourth message further comprises identification information of the first network element; and
the second message further comprises the identification information of the first network element, and the identification information of the first network element is used to determine a data forwarding policy of the first session.

17. The method according to any one of claims 11 to 16, wherein the method further comprises:
sending the fourth indication information to the terminal device, wherein the fourth indication information indicates the information type of the first information requested to be reported.

18. The method according to any one of claims 10 to 17, wherein the method further comprises:
sending fifth indication information to the terminal device, wherein the fifth indication information is used to request the terminal device to stop sending the first information.

19. A communication method, wherein the method is applied to a user plane network element, and the method comprises:
receiving second identification information, wherein the second identification information is used to identify a first session, the second identification information further indicates that the first session is used to collect first information, and the first information is used for model training or model inference;
receiving a data forwarding policy of the first session, wherein the data forwarding policy of the first session indicates a data forwarding policy of the first information sent by a terminal device via the first session; and
sending, to the first network element according to the data forwarding policy of the first session, the first information received by the user plane network element via the first session.

20. The method according to claim 19, wherein receiving the second identification information comprises:
receiving the second identification information sent by the first network element; or
receiving the second identification information sent by a session management network element.

21. The method according to claim 19 or 20, wherein the data forwarding policy of the first session comprises any one of the following: the user plane network element locally stores data of the first session, or the user plane network element forwards data of the first session to the first network element.

22. The method according to claim 21, wherein when the data forwarding policy of the first session is that the user plane network element locally stores the data of the first session,
receiving the second identification information sent by the first network element comprises:
receiving a fifth message sent by the first network element, wherein the fifth message comprises the second identification information; and
sending, to the first network element according to the data forwarding policy of the first session, the first information received by the user plane network element via the first session comprises:
sending the first information to the first network element in response to the fifth message, wherein the first information is data determined by the user plane network element from locally stored data based on the second identification information.

23. The method according to claim 21, wherein when the data forwarding policy of the first session is that the user plane network element forwards the data of the first session to the first network element,
receiving the second identification information sent by the session management network element comprises:
receiving a third message sent by the session management network element, wherein the third message is used to request to create the first session, and the third message comprises the second identification information; and
sending, to the first network element according to the data forwarding policy of the first session, the first information received by the user plane network element via the first session comprises:
determining, based on identification information of the first network element comprised in the third message, that a forwarding destination of the data of the first session is the first network element; and
forwarding the first information from the terminal device to the first network element according to the data forwarding policy of the first session.

24. The method according to any one of claims 19 to 23, wherein receiving the data forwarding policy of the first session comprises:
receiving the first information sent by the terminal device, wherein the first information further comprises seventh indication information, and the seventh indication information indicates the data forwarding policy of the first session.

25. A communication method, wherein the method is applied to a first network element, and the method comprises:
sending a first request, wherein the first request comprises second identification information, the first request indicates a user plane network element to report first information corresponding to the second identification information, and the first session is a session established between a terminal device and the first network element; and
receiving the first information from the user plane network element, wherein the first information is transmitted in the first session, and the first information comprises measurement information of the terminal device.

26. The method according to claim 25, wherein the method further comprises:
performing model training or model inference based on the first information.

27. The method according to claim 25 or 26, wherein the first request further comprises identification information of the first network element, and the identification information of the first network element is used to determine a data forwarding policy of the first session.

28. The method according to any one of claims 25 to 27, wherein the sending the first request comprises:
sending a fourth message to an access and mobility management network element, wherein the fourth message is used to request identification information of the terminal device that supports reporting of the first information; or
sending a fifth message to the user plane network element, wherein the fifth message is used to request the first information of the terminal device; or
sending a sixth message to a session management network element, wherein the sixth message is used to request the first information of the terminal device.

29. The method according to any one of claims 25 to 28, wherein the method further comprises:
receiving a third identifier set sent by the session management network element, wherein the third identifier set comprises one or more identifiers, the identifiers comprised in the third identifier set indicate one or more user plane network elements, and the user plane network element indicated by the third identifier set corresponds to the terminal device that supports sending of the first information.

30. A communication apparatus, comprising a transceiver module and a processing module, wherein
the transceiver module is configured to input and/or output signaling or data; and
the processing module is configured to perform, via a communication unit, the method according to any one of claims 1 to 9, the method according to any one of claims 10 to 18, the method according to any one of claims 19 to 24, or the method according to any one of claims 25 to 29.

31. A communication apparatus, comprising a communication interface and a processor, wherein
the communication interface is configured to input and/or output signaling or data; and
the processor is configured to execute a computer-executable program, so that the method according to any one of claims 1 to 9 is performed, or the method according to any one of claims 10 to 18 is performed, or the method according to any one of claims 19 to 24 is performed, or the method according to any one of claims 25 to 29 is performed.

32. A communication apparatus, comprising a processor and a memory, wherein
the memory is configured to store a computer program or instructions; and
the processor is configured to execute the computer program or the instructions in the memory, so that the method according to any one of claims 1 to 9 is performed, or the method according to any one of claims 10 to 18 is performed, or the method according to any one of claims 19 to 24 is performed, or the method according to any one of claims 25 to 29 is performed.

33. A computer-readable storage medium, comprising instructions, wherein when the instructions are executed by a processor, the method according to any one of claims 1 to 9, the method according to any one of claims 10 to 18, the method according to any one of claims 19 to 24, or the method according to any one of claims 25 to 29 is implemented.

34. A computer program product, comprising a program, wherein when the program is executed by a processor, the method according to any one of claims 1 to 9, the method according to any one of claims 10 to 18, the method according to any one of claims 19 to 24, or the method according to any one of claims 25 to 29 is implemented.

35. A chip system, wherein the chip system comprises at least one processor, and when program instructions are executed by the at least one processor, the method according to any one of claims 1 to 9, the method according to any one of claims 10 to 18, the method according to any one of claims 19 to 24, or the method according to any one of claims 25 to 29 is implemented.

36. A communication system, comprising a communication apparatus configured to perform the method according to any one of claims 1 to 9, a communication apparatus configured to perform the method according to any one of claims 10 to 18, a communication apparatus configured to perform the method according to any one of claims 19 to 24, and a communication apparatus configured to perform the method according to any one of claims 25 to 29.
